# FASCICULE DE BREVET EUROPEEN

(11) **EP 1 518 071 B1**
(45) Date de publication et mention de la délivrance du brevet: **19.03.2008**
(21) Numéro de dépôt: 03761622.4
(22) Date de dépôt: 18.06.2003
(51) Int. Cl.: F16L 59/14

(54) **DISPOSITIF D ISOLATION THERMIQUE D AU MOINS UNE CONDUITE SOUS-MARINE COMPRENANT UN MATERIAU A CHANGEMENT DE PHASE CONFINE DANS DES POCHES**
VORRICHTUNG ZUR WÄRMEISOLIERUNG MINDESTENS EINER UNTERWASSERROHRLEITUNG MIT EINEM IN MÄNTELN EINGESCHLOSSENEN PHASENUMWANDLUNGSMATERIAL
DEVICE FOR THERMAL INSULATION OF AT LEAST A SUBMARINE PIPELINE COMPRISING A PHASE-CHANGE MATERIAL CONFINED IN JACKETS

(30) Priorité: 01.07.2002 FR 0208179
(43) Date de publication de la demande: 30.03.2005
(73) Titulaire: SAIPEM S.A., 78180 Montigny-le-Bretonneux (FR)
(72) Inventeur: HALLOT, Raymond, F-13500 Martigues (FR); PIONETTI, François-Régis, F-50450 La Baleine (FR)
(74) Mandataire: Domange, Maxime
(86) Numéro de dépôt international: PCT/FR2003/001869
(87) Numéro de publication internationale: WO 2004/003424

(56) Documents cités:
- WO-A-00/40886
- FR-A- 2 788 831
- US-A- 6 000 438

## Description

La présente invention concerne des dispositifs et procédés d'isolation thermique d'au moins une conduite sous-marine reposant au fond de la mer, notamment à grande profondeur, ou reliant le fond de la mer à des installations ancrées flottant en surface.

Elle concerne plus particulièrement les conduites reliant le fond de la mer à des installations ancrées flottant en surface.

Le secteur technique de l'invention est le domaine de la fabrication et du montage de systèmes d'isolation à l'extérieur et autour des conduites dans lesquelles circulent des effluents chauds dont on veut limiter les déperditions de chaleur.

Cette invention s'applique plus particulièrement aux développements de champs pétroliers en mer profonde, c'est à dire des installations pétrolières installées en pleine mer, dans lesquelles les équipements de surface sont en général situés sur des structures flottantes, les têtes de puits étant au fond de la mer. Les conduites concernées par la présente invention étant plus particulièrement les risers ou conduites de liaison fond-surface remontant vers la surface, mais aussi les conduites reliant les têtes de puits aux dites conduites de liaisons fond surface.

Les développements en mer profonde sont effectués par des profondeurs d'eau atteignant actuellement 1500 m. Les développements futurs sont envisagés par des profondeurs d'eau jusqu'à 3000-4000m et au delà.

L'application principale de l'invention est l'isolation thermique de conduites ou canalisations immergées, sous-marines ou subaquatiques, et plus particulièrement à grande profondeur, au-delà de 300 mètres, et véhiculant des produits pétroliers chauds dont un trop grand refroidissement serait problématique aussi bien en régime de production normale qu'en cas d'arrêt de production.

En effet dans ce type d'applications, de nombreux problèmes se posent si la température des produits pétroliers diminue d'une valeur significative importante par rapport à leur température de production, cette dernière étant en général de 60 à 80°C voire au-delà, alors que la température de l'eau environnante surtout à grande profondeur peut être largement inférieure à 10°C et atteindre 4°C. Si les produits pétroliers se refroidissent par exemple en dessous d'une certaine température T₁ qui dépend de la qualité du pétrole concerné, en général, une température T₁ de 20° à 60°C, on observe :
- une forte augmentation de la viscosité qui diminue alors le débit de la conduite,
- une précipitation de paraffine dissoute qui augmente alors la viscosité du produit et dont le dépôt peut diminuer le diamètre intérieur utile de la conduite,
- la floculation des asphaltènes induisant les mêmes problèmes,
- la formation soudaine, compacte et massive d'hydrates de gaz qui précipitent à forte pression et faible température, obstruant ainsi brusquement la conduite.

Paraffines et asphaltènes restent accrochés à la paroi et nécessitent alors un nettoyage par raclage de l'intérieur de la conduite ; en revanche, les hydrates sont encore plus difficiles, voire même parfois impossibles à résorber.

L'isolation thermique de telles conduites a donc pour fonction - entre autres - de retarder le refroidissement des effluents pétroliers véhiculés non seulement en régime de production établi, pour que leur température soit au moins supérieure ou égale à T₁, soit par exemple d'au moins 40°C en arrivant en surface, pour une température de production à l'entrée de la conduite de T₂= 60°C à 80°C, mais également en cas de diminution ou même d'arrêt de la production, afin d'éviter que la température des effluents ne descende trop en dessous de la température T₁, par exemple en dessous de 30°C, afin de limiter les problèmes ci-dessus, ou tout au moins de permettre de les rendre réversibles.

Dans le cas de l'installation de conduites uniques ou de faisceaux de conduites (appelés communément « bundles »), on préfère en général préfabriquer lesdites conduites à terre en longueurs unitaires de 250 à 500 m, que l'on tire ensuite depuis le large à l'aide d'un remorqueur. Dans le cas d'une liaison fond-surface de type tour, la longueur de conduite représente en général de 50 à 95% de la hauteur d'eau, c'est à dire qu'elle peut atteindre 2400m pour une profondeur d'eau de 2500m. Lors de sa fabrication à terre, on tire depuis la mer la première longueur unitaire que l'on raboute à la suivante, le remorqueur maintenant l'ensemble en traction pendant la phase de raboutage, laquelle peut durer plusieurs heures, voire plusieurs jours. Lorsque l'intégralité de la conduite ou du faisceau de conduites a été mis à l'eau, l'ensemble est remorqué vers le site, en général en subsurface, sensiblement à l'horizontale, où il est alors « cabané », c'est à dire basculé en position verticale, pour atteindre la position verticale, puis il mis en place en position définitive.

On connaît un dispositif d'isolation thermique d'au moins une conduite sous marine comportant un revêtement extérieur isolant entourant celle-ci et une enveloppe extérieure de protection, ladite enveloppe extérieure ayant une double fonction :
- d'une part d'éviter les endommagements qui peuvent se produire lors de la fabrication ou lors du remorquage comme lors de la pose, surtout dans les zones de faible profondeur d'eau, ledit remorquage pouvant dans certains cas se faire sur des distances de plusieurs centaines de kilomètres. A cet effet, on utilise des matériaux assez résistants tels qu'en acier, en composé thermoplastique ou thermodurcissable ou encore en matériau composite, et
- d'autre part de créer un confinement étanche autour du système d'isolation. Ce confinement est nécessaire dans le cas de revêtements extérieurs isolants constitués de matériaux sujets à migration, voire comprenant des composés fluides.

En effet, par des fonds de 2000 m, la pression hydrostatique est de l'ordre de 200 bars, soit 20 Méga Pascals, ce qui implique que l'ensemble des conduites et de leur revêtement en matériau isolant doit être capable de résister non seulement à ces pressions sans dégradation lors des pressurisations et dépressurisations de la conduite dans laquelle circule le fluide chaud, mais encore aux cycles de température lesquels engendrent des variations de volume des différents composants, et donc de pressions positives ou négatives pouvant conduire à la destruction partielle ou totale de l'enveloppe soit par dépassement des contraintes admissibles, soit par implosion de cette enveloppe externe (variations de pression interne négatives).

Dans WO 00/40886, on connaît un dispositif d'isolation dans lequel on met en oeuvre un matériau d'isolation à changement de phase solide-liquide et chaleur latente de fusion, et dont le changement de phase s'effectue à une température T₀ supérieure à la température T₁ à partir de laquelle le pétrole circulant à l'intérieur de la conduite devient trop visqueux, en général la température T₁ est comprise entre 20° et 60°C et inférieure à la température T₂ du pétrole brut à l'entrée de la conduite.

Un matériau à changement de phase, ci après dénommé "PCM" (Phase Change Material), permet de conserver, en cas d'arrêt de production, le fluide normalement en circulation à l'intérieur de la conduite intérieure à une température élevée, de manière à éviter la formation de paraffines ou d'hydrates dans le pétrole.

Ainsi, lors des arrêts de production, le pétrole brut ne circule plus et reste en position au sein de la conduite et la déperdition de calories vers l'environnement extérieur, en général à 4°C par très grand fond, est effectuée au détriment du PCM, le pétrole brut restant toujours à une température supérieure ou sensiblement égale à celle dudit PCM.

Pendant toute la phase de solidification ou cristallisation du PCM, la température du PCM reste sensiblement constante et égale à T₀, par exemple 36°C, et donc, la conduite interne comportant du pétrole brut reste à une température supérieure ou sensiblement égale à celle (Tₒ) du PCM, c'est à dire 36°C, empêchant ainsi la formation de paraffines ou d'hydrates dans le pétrole brut.

Ledit matériau isolant à changement de phase est choisi de préférence pour sa faible conductivité thermique, notamment une conductivité inférieure à 0,5 watt/mètre/degré Celsius.

Ledit matériau isolant PCM est choisi notamment parmi les matériaux constitués d'au moins 90 % de composés chimiques choisis parmi les alcanes, notamment comprenant une chaîne hydrocarbonée d'au moins 10 atomes de carbone, ou encore les sels hydratés ou pas, les glycols, les bitumes, les goudrons, les cires, et autres corps gras solides à température ambiante, tels que le suif, la margarine ou les alcools gras et acides gras, de préférence, le matériau incompressible est constitué de paraffine comprenant une chaîne hydrocarbonée d'au moins 14 atomes de carbone.

Les matériaux à changement de phase décrits précédemment présentent généralement une variation volumique importante lors de leur changement d'état, pouvant atteindre 20 % dans le cas des paraffines. L'enveloppe extérieure de protection doit pouvoir s'accommoder sans dommage de ces variations de volume.

C'est pourquoi, selon WO 00/40886, ce matériau isolant à changement de phase est confiné au sein d'une enveloppe étanche et déformable, ce qui la rend capable de suivre l'expansion et la contraction des divers composants sous l'influence de tous les paramètres d'environnement, dont les températures interne et externe. La conduite est ainsi soit confinée au sein-d'une enveloppe semi-rigide ou souple thermoplastique, notamment en polyéthylène ou polypropylène, par exemple circulaire, l'accroissement ou la réduction du volume intérieur, dû aux variations de température, comparable à une respiration est absorbée par la souplesse de l'enveloppe constituée par exemple d'un matériau thermoplastique présentant une grande limite élastique. Pour résister aux contraintes mécaniques, on utilise de préférence une enveloppe semi-rigide constituée d'un matériau résistant tel l'acier ou un matériau composite, tel qu'un composé réalisé à partir d'un liant tel qu'une résine époxy et des fibres minérales ou organiques telles que des fibres de verre ou de carbone, mais alors on donne à l'enveloppe une forme ovoïde ou aplatie, avec ou sans contre-courbure, ce qui lui confère, à périmètre constant, une section inférieure au cercle correspondant. Ainsi, la « respiration » du faisceau, conduira, dans le cas d'une augmentation et d'une réduction du volume, respectivement à une « remise au rond » de l'enveloppe, ou à une accentuation de l'aplatissement de ladite enveloppe. Dans ce cas, l'ensemble faisceau-enveloppe est désignée par le terme « bundle plat », par opposition à une enveloppe circulaire.

Dans WO 00/40886, le matériau PCM est absorbé au sein d'une matrice absorbante, et il occupe tout l'espace compris entre la conduite et ladite enveloppe externe avec laquelle il reste toujours en contact, ladite enveloppe étant déformable.

Lors de la fabrication d'un dispositif d'isolation selon cette invention, laquelle s'effectue de préférence à terre, on remplit l'espace entre la ou les conduite(s) et l'enveloppe externe avec le matériau PCM à l'état liquide, donc chaud. Il y a cependant un risque lors du remplissage dudit matériau PCM, que des solidifications localisées dudit matériau PCM ne se produisent, empêchant ainsi un remplissage intégral du volume. Dans ce cas, il en résulte la création de zones vides ou de poches de gaz préjudiciables, d'une part à l'effet d'isolation lors du futur fonctionnement de l'installation, mais aussi et surtout, une fragilité au plan mécanique, avec des risques d'effondrement localisé de l'enveloppe lorsque la conduite est installée à grande profondeur, c'est à dire est soumise à des pressions hydrostatiques très importantes. Ces problèmes sont facilement maîtrisés sur de courtes longueurs de conduite, par exemple de 6 ou 12 mètres, mais ils sont beaucoup plus difficiles à éviter sur des longueurs importantes, notamment à partir de 100 mètres.

Pour surmonter ces inconvénients, on a développé dans la technique antérieure des dispositifs d'isolation comprenant un matériau isolant constitué de gel présentant un bon niveau d'isolation. La gélification présente l'avantage d'empêcher les phénomènes de convection au sein de la masse isolante. En outre, le gel est en général obtenu à partir de réactions physiques, chimiques ou physico-chimiques entre différents composants, ce qui permet de l'injecter sous forme liquide juste après mélange des différents composants, le remplissage intégral de l'enveloppe pouvant être effectué avant que la gélification en masse ne commence de manière significative.

On a aussi proposé des modes de réalisation dans lesquels un matériau isolant PCM est formulé sous forme de particules ou micro-capsules de dit matériau PCM uniformément dispersé au sein d'une matrice d'un matériau isolant primaire, notamment un gel isolant pour faciliter l'occupation de tout l'espace entre la conduite et l'enveloppe externe.

Toutefois, ce mode de réalisation présente l'inconvénient que la quantité de matériau PCM entourant la conduite est nécessairement réduite puisque celui-ci se trouve réparti de manière discontinue autour de la conduite.

D'autre part, les inventeurs ont découvert que seul le matériau PCM proche de la conduite chaude peut accumuler de la chaleur lors de sa liquéfaction, le matériau PCM proche de l'enveloppe extérieure étant lui en général à la température du fond de la mer, c'est à dire à 4°C, ne participe pas au processus d'accumulation de chaleur et reste donc toujours solide ou cristallisé. Cette partie du matériau PCM proche de l'enveloppe externe est donc inefficace et inutile et même préjudiciable dans le cas d'emploi de PCM présentant une forte conductibilité thermique intrinsèque tels les sels métalliques.

D'autre part encore, les réalisations antérieures ont été décrites pour des applications dans lesquelles la conduite repose horizontalement sur le fond de la mer. Mais certains problèmes se posent dans le cas de liaisons fond-surface.

En effet, dans le cas d'une liaison fond-surface, par exemple la portion verticale d'une tour ou encore la section en chaînette reliant le sommet de la tour au support de surface, ou encore des conduites reposant sur une forte déclivité du fond de la mer, la pression extérieure varie le long de la conduite et décroît au fur et à mesure que l'on remonte vers la surface. Dans le cas de matériaux isolants pâteux ou fluides comme les matériaux PCM, ce dernier présentant une densité inférieure à celle de l'eau de mer, en général une densité de 0.8 à 0.85, la pression différentielle entre l'extérieur et l'intérieur variera le long de la dite conduite, augmentant au fur et mesure que l'on monte vers la surface. Ainsi, il s'en suit des déformations accentuées dans les parties présentant le maximum de pression différentielle, induisant ainsi d'importants transferts de fluide parallèlement à l'axe longitudinal de ladite conduite. En outre, les transferts sont amplifiés par les phénomènes de « respiration » dus aux variations de température tels que décrits ci-dessus.

Un « bundle plat » est sensible aux variations de pression dues aux déclivités : surpression en bas, dépression en haut, et la phase de remorquage est critique, car la longueur pouvant atteindre plusieurs kilomètres, le « bundle » n'est en fait jamais parfaitement à l'horizontal et il en résulte des variations de pression différentielle importantes lors dudit remorquage et surtout lors de l'opération de cabanage, dans le cas de liaisons fond-surface.

Quand le « bundle » est en position verticale ou au fond de la mer sur une déclivité importante, le différentiel de pression créé par la faible densité du matériau isolant, associé à la variation de volume créée par l'expansion thermique du matériau isolant, engendre des mouvements du matériau isolant que doit pouvoir supporter l'enveloppe extérieure. On cherche à éviter les mouvements de particules parallèlement à l'axe du bundle, c'est à dire les migrations de matériau isolant entre deux zones distantes du « bundle », car ils risquent de détruire la structure physique proprement dite du matériau isolant.

Pour que le « bundle » ait un bon comportement pendant toute sa durée de vie, il est souhaitable qu'il ne comporte pas de gaz résiduel. En effet, dans le cas de complexe isolant pâteux ou semi-fluide, toute poche de gaz résultant du processus de fabrication aura des répercussions, d'une part sur le transport, car, dès que le « bundle » est en remorquage à profondeur importante, la pression ambiante comprime le gaz résiduel, ce qui risque de réduire de manière significative la flottabilité, pouvant ainsi conduire à des situations dangereuses non seulement pour les matériels mais aussi pour le personnel ; d'autre part, lors de la mise en position verticale, toutes les poches de gaz comprimé se rassemblent vers le haut du « bundle », risquant ainsi de créer une longueur significative de conduite dépourvue de composant isolant.

Un premier but de la présente invention est donc de fournir un dispositif d'isolation thermique d'au moins une conduite sous-marine comportant un matériau à changement de phase, de préférence un matériau isolant à changement de phase qui cumule les objectifs suivants :
a) une simplicité de fabrication du dispositif d'isolation avec notamment un remplissage en dit matériau isolant à changement de phase qui supprime ou diminue les risques de création de vide ou de poches de gaz dans le volume à remplir entre la conduite et l'enveloppe externe, et
b) une localisation et une répartition du matériau à changement de phase autour de la conduite et à proximité de celle-ci plutôt que de l'enveloppe, de façon à en améliorer l'efficacité.

Un autre but de la présente invention est de fournir un système d'isolation de conduite comprenant un revêtement en matériau PCM de type semi-fluide ou pâteux qui puisse être mis en place autour de la conduite, à terre, le plus simplement et au meilleur coût, de manière à ce que la conduite puisse être remorquée en sub-surface, et cabanée en position verticale pour l'installer, tout en respectant l'intégrité de l'ensemble jusqu'à sa mise en production et pendant toute sa durée de vie, qui dépasse en général 30 années.

Un autre but est de pouvoir réaliser une isolation d'au moins une conduite sous-marine de liaison fond-surface ou destinée à être posée sur le fond, en particulier à grande profondeur, en particulier dans des zones à forte déclivité, capable de fournir une souplesse transversale importante pour absorber les variations de volume du matériau PCM contenu dans une enveloppe externe et entourant la conduite, tout en conservant une rigidité longitudinale suffisante pour autoriser les manutentions, telles la préfabrication à terre, le remorquage vers le site, et la conservation de l'intégrité mécanique de ladite enveloppe pendant toute la durée de vie du produit, laquelle dépasse 30 ans.

Un problème posé est donc de minimiser les migrations longitudinales des matériaux isolants sujets à migration contenus dans ladite enveloppe, ce qui est particulièrement important dans le cas où ledit matériau isolant est semi-fluide ou pâteux notamment du type matrice isolante gélifiée, en raison des risques de dégradation des performances du complexe isolant dès lors que des cisaillements internes inconsidérés sont appliqués à ladite matrice isolante.

En outre, un autre problème est de créer un système d'isolation d'une conduite sous-marine ou d'un faisceau de conduites au sein d'un dit "bundle plat" intégrant un matériau à changement de phase, de préférence un matériau isolant PCM, et dont le comportement en phase de redémarrage soit tel que ledit redémarrage puisse être réalisé en un temps contrôlable et notamment réduit par rapport à l'art antérieur.

En effet, en cas d'arrêt de plusieurs jours ou de plusieurs semaines, pendant la période active du PCM, on prend en général la précaution de purger la ligne en effectuant une circulation en boucle d'un produit de substitution, par exemple du gazole, de manière à garder l'ensemble en sécurité avant de laisser la conduite descendre en température jusqu'à 4°C. Et, lors du redémarrage, on utilise en général le même gazole pour effectuer le réchauffage de la conduite en le faisant circuler en boucle à partir du support flottant où on le réchauffe en le faisant passer dans des chaudières ou des échangeurs de chaleur, en récupérant des calories en provenance des turbines à gaz.

Ainsi, lors du réchauffage, les calories vont migrer de l'intérieur de la conduite vers le milieu ambiant extérieur, en général à 4°C et, pendant toute de la phase de réchauffage, la majeure partie des calories véhiculées par le gazole en circulation vont être absorbées par le PCM pour sa reliquéfaction, ce qui peut prendre plusieurs jours, voire plusieurs semaines si la conduite est très longue, ou si la production de calories au niveau du support flottant est insuffisante. Ce n'est qu'après cette phase de réchauffage avec circulation de gazole, que l'on peut reconnecter les têtes de puits et reprendre la production.

En effet, si on redémarre prématurément la production, le PCM ne sera que partiellement liquide et la température interne sera inférieure ou égale à T₀ (température de changement de phase), donc basse, sur l'ensemble de la conduite sous-marine, et l'on observe alors les phénomènes suivants.

Au cours de la progression du pétrole sortant du puits à une température élevée, par exemple 75°C, vers le FPSO, il fournit des calories au PCM pour sa liquéfaction, et de ce fait, la température du pétrole baisse rapidement, car le PCM joue le rôle, non pas de système d'isolation, mais le rôle inverse d'absorbeur de calories, conduisant à un refroidissement accéléré du pétrole brut. Ainsi, après un parcours de quelques kilomètres, voire de quelques centaines de mètres seulement, la température du pétrole descendra à la valeur critique de T₁ à laquelle des phénomènes redoutés de formation de bouchons d'hydrates ou de paraffine au sein du pétrole circulant dans la conduite peuvent se produire et alors conduire à un blocage du flux de pétrole brut. Dans la zone proche des têtes de puits, le PCM se reliquéfiera progressivement et le front de reliquéfaction complète progressera lentement vers le FPSO. Dans une zone plus éloignée, la température restera stable aux alentours de T₀ et la liquéfaction ne pourra se poursuivre que si le pétrole brut est toujours à une température supérieure à T₀.

Ainsi, dans le cas de lignes très longues, par exemple de 5 ou 6 kms, dans une zone très éloignée de la source chaude, c'est à dire proche du FPSO, il n'y aura pas suffisamment d'apport de calories et le PCM perdra alors des calories vers le milieu ambiant à 4°C. Pour fournir ces calories il passera progressivement à l'état solide.

Ainsi, surtout pour des conduites très longues, il apparaît que, lors d'un redémarrage, le PCM dans la zone proche des têtes de puits peut être en phase de reliquéfaction, alors qu'à l'autre extrémité, proche du FPSO, le PCM est en phase de resolidification, car la déperdition de calories vers le milieu ambiant est supérieure à l'apport en calorie par le pétrole brut circulant dans la conduite. En fait le PCM est en attente d'un front chaud de pétrole brut qui le transformera à nouveau en phase liquide.

Enfin, un dernier but de la présente invention est donc de réaliser un système d'isolation de conduite comportant un matériau à changement de phase qui n'absorbe pas trop rapidement les calories du fluide chaud circulant dans la conduite en phase de redémarrage et donc permettant d'allonger la période de maintient en température du fluide circulant dans une conduite sous-marine, au delà d'une valeur fixée, de sorte que la durée de la période de réchauffage par le produit de substitution circulant en boucle, après un arrêt prolongé et donc la durée de la phase de redémarrage soit réduite, tel que, par exemple, on puisse se contenter de réchauffer partiellement la conduite sans avoir à attendre que l'intégralité du matériau PCM soit complètement liquéfiée.

Pour ce faire, la présente invention fournit un dispositif d'isolation thermique d'au moins une conduite sous-marine comportant :
- un revêtement isolant thermique entourant la ou lesdites conduite(s),
- ledit revêtement étant recouvert d'une enveloppe externe étanche de protection, et ladite enveloppe étant constituée d'un matériau souple ou semi-rigide apte à rester au contact de la surface extérieure dudit revêtement isolant lorsque celui-ci se déforme,
caractérisé en ce que :
- le dit revêtement isolant comprend un matériau à changement de phase, de préférence un matériau isolant à changement de phase confiné dans au moins une poche réalisée dans un matériau souple ou semi-rigide déformable, et
- la ou lesdites poche(s) étant disposée(s) autour de la ou lesdites conduite(s).

Les inventeurs ont découvert que le confinement du matériau à changement de phase, dans des emballages en forme de poche souple déformable présente de nombreux avantages et permet de résoudre les problèmes et inconvénients mentionnés précédemment, à savoir :
1) la mise en place du matériau PCM autour de la conduite est beaucoup plus simple à réaliser car on remplit séparément et préalablement le matériau PCM dans desdites poches,
2) le matériau PCM peut être localisé dans la zone où il est le plus efficace, à savoir essentiellement localisé à proximité de la conduite,
3) les poches contribuent à maintenir ledit matériau isolant à changement de phase en forme car celui-ci est sujet à migration, toutefois lesdites poches étant souples ou semi-rigides, de préférence semi-rigides, la matériau à changement de phase peut subir des variations de volume consécutives à son changement de phase car ladite poche peut se déformer.
4) le poches permettent de mettre en oeuvre des matériaux isolants PCM à l'intérieur de l'enveloppe et d'autres matériaux isolants à l'extérieur de l'enveloppe qui seraient incompatibles chimiquement s'ils étaient en contact.

On entend ici par poche "semi-rigide", une poche suffisamment rigide pour se maintenir en forme en dépit du poids et de la pression exercée par le matériau à changement de phase qu'elle contient, mais présentant néanmoins une certaine souplesse pour accepter des déformations, notamment pour suivre des déformations résultant du changement de volume du matériau lors de son changement de phase.

Dans un mode de réalisation préféré, caractérisé en ce que dans une section transversale de la ou desdites conduite(s), au niveau de la ou desdites poche(s), la ou lesdites conduite(s) se trouve(nt) entourée(s) par la ou lesdites poche(s) de manière sensiblement continue.

Ceci signifie que la ou lesdites poche(s) est (ou sont) répartie(s) et assemblée(s) autour de chacune desdites conduites prises séparément ou de l'ensemble des deux dites conduites, de manière sensiblement continue, de sorte que chaque conduite se trouve ainsi quasiment entièrement séparée de ladite enveloppe externe de protection par desdites poches. Ceci permet d'uniformiser l'isolation autour de la conduite ou de chacune des dites conduites et ainsi éviter l'apparition de points froids.

Plus particulièrement, dans les portions de la ou les conduite(s) entourée(s) desdites poches, le dispositif comprend au moins deux, de préférence trois ou quatre poches dans une section transversale de la ou desdites conduite(s) entourée(s) par desdites poches, de préférence encore entourant la ou lesdites conduite(s) de manière sensiblement continue.

Dans un autre mode de réalisation, la ou les conduites sont entourées par une seule poche repliée sur elle même de telle manière que les arêtes longitudinales soient situées face à face à faible distance l'une de l'autre.

De préférence encore, lesdites poches sont placées à proximité de la conduite de manière à ce qu'au moins une partie, de préférence la totalité de la ou desdites poche(s) ne soit pas directement en contact avec celle-ci.

Cet espace entre le matériau PCM et la conduite permet de réduire la vitesse d'absorption de calories du pétrole sortant de la tête de puits en phase de redémarrage de la production après un arrêt, afin que le pétrole reste en température le plus longtemps possible et n'atteigne la valeur T₀ que lorsqu'il est suffisamment proche de la surface pour atteindre celle-ci sans que sa température ne chute en dessous de la température T₁ à laquelle certains de ses composants se figent empêchant ainsi sa circulation au sein de la conduite.

Dans un mode de réalisation, lesdites poches sont disposées contre des cales, lesdites cales étant disposées contre et autour de ladite conduite de manière à laisser un espace entre lesdites poches et ladite conduite.

Il est avantageux que la distance entre la conduite et la poche ne soit pas excessive, de manière à réduire la quantité de matériau PCM qui doit être mis en oeuvre.

Plus particulièrement, lesdites poches sont espacées de ladite conduite d'une distance de 5 mm à 10 cm, de préférence de 1 à 5 cm.

Dans un autre mode de réalisation avantageux, ladite conduite est entourée par un second matériau isolant solide appliqué contre ladite conduite, de préférence sous forme de coquille de mousse syntactique, lesdites poches étant appliquées contre ledit matériau isolant solide entourant ladite conduite.

Cette configuration permet de ralentir encore davantage le transfert de calories du fluide circulant dans la conduite vers le matériau isolant PCM lors du redémarrage de la production à l'intérieur de la conduite.

Dans un mode préféré de réalisation, ledit revêtement isolant recouvert d'une dite enveloppe étanche de protection comprend un matériau principal, de préférence, un gel isolant disposé entre ladite enveloppe externe et la ou lesdites poche(s) de matériau isolant à changement de phase entourant la ou lesdites conduite(s).

Dans un mode de réalisation, ledit matériau isolant principal constitue également un matériau isolant à changement de phase qui peut être identique ou différent au dit matériau à changement de phase, isolant ou non, contenu dans lesdites poches.

Dans un mode de réalisation, ledit matériau isolant principal entoure la ou lesdites conduite(s) et assure la séparation entre la ou lesdites conduite(s) et lesdites poches dans l'espace séparant la ou lesdites poche(s) et la ou lesdites conduite(s).

Comme mentionné précédemment, ledit matériau à changement de phase présente une température de fusion liquide/solide (T0) de préférence compris entre 20 et 80°C, supérieure à la température (T1) à partir de laquelle le fluide circulant à l'intérieur de la conduite présente une augmentation de viscosité dommageable pour sa circulation dans ladite conduite, et inférieure à la température (T2) du fluide en circulation dans la conduite en opération.

On entend ici par « matériau isolant » un matériau présentant de préférence une conductivité thermique inférieure à 0.5 W x m⁻¹ x K⁻¹, de préférence encore entre 0.05 et 0.2 W x m⁻¹ x K⁻¹ (Watt/mètre/Kelvin).

Plus particulièrement, ledit matériau isolant à changement de phase comprend des composés chimiques de la famille des alcanes, de préférence une paraffine comprenant une chaîne hydrocarbonée d'au moins quatorze atomes de carbone.

Plus particulièrement encore, ladite paraffine est de l'heptacosane de formule C₁₇H₃₆ présentant une température de fusion d'environ 50°C.

On peut aussi utiliser une coupe paraffinique industrielle centrée sur l'heptacosane.

Dans un mode de réalisation; ledit matériau isolant principal situé notamment entre lesdites poches et ladite enveloppe externe, est constitué d'un complexe isolant comprenant un premier composé consistant en un composé hydrocarboné comme la paraffine ou le gazole, en mélange avec un second composé consistant en un composé gélifiant et/ou à effet structurant, notamment par réticulation, tel qu'un second composé du type polyuréthane, polypropylène réticulé, polyéthylène réticulé ou silicone, de préférence ledit premier composé se présentant sous forme de particules ou micro-capsules dispersées au sein d'une matrice dudit second composé:

On peut citer plus particulièrement comme premiers composés les composés chimiques de la famille des alcanes, tels que des paraffines ou des cires, des bitumes, des goudrons, des alcools gras, des glycols, plus particulièrement encore des composés dont la température de fusion des matériaux est comprise entre la température **T₂** des effluents chauds circulant dans une des conduites et la température **T₃** du milieu environnant de la conduite en opération, soit en fait en général une température de fusion comprise entre 20 et 80°C. On utilise par exemple comme paraffine l'heptacosane de formule C₁₇H₃₆ présentant une température de fusion d'environ 50°C.

Ces différents matériaux isolants sont des matériaux "sujets à migration", c'est à dire, des matériaux liquides, pâteux ou de consistance solide, telle que la consistance d'une graisse, d'une paraffine ou d'un gel, qui sont susceptibles d'être déformés par les contraintes résultant de pressions différentielles entre deux points distincts de l'enveloppe et/ou de variations de température au sein dudit matériau isolant.

C'est pourquoi, selon une autre caractéristique de la présente invention un dispositif d'isolation thermique d'au moins une conduite sous-marine comporte au moins deux cloisons transversales étanches, chacune desdites cloisons étant constituées d'une structure rigide fermée traversée par la ou lesdites conduite(s), et solidaires de la ou desdites conduite(s) et de ladite enveloppe, et lesdites poches étant disposées autour de la ou desdites conduite(s) entre les deux dites cloisons transversales.

Cette structure rigide solidaire de l'enveloppe empêche le déplacement de ladite enveloppe en regard de ladite cloison et par rapport à celle-ci et fige donc la géométrie de la section transversale de l'enveloppe au niveau de ladite cloison.

On entend par « étanche » et « fermé » que ladite cloison ne permet pas le passage de la matière constituant ledit revêtement isolant à travers ladite cloison, et qu'en particulier, la jonction entre ladite conduite et les orifices à travers lesquels ladite conduite traverse ladite cloison ne permet pas le passage de ladite matière du revêtement isolant.

Lesdites cloisons étanches assurent le confinement du ou desdits matériau(x) isolant(s) sujet(s) à migration constituant ledit revêtement isolant entre ladite enveloppe et lesdites cloisons.

On entend par « section transversale » la section dans un plan XX', YY' perpendiculaire à l'axe longitudinal ZZ' de ladite enveloppe, ladite enveloppe étant de forme tubulaire et présentant un axe longitudinal central ZZ', et de préférence, la section transversale de ladite enveloppe définissant un périmètre présentant deux axes de symétrie XX' et YY' perpendiculaires entre eux, et audit axe longitudinal ZZ'.

Dans un mode de réalisation particulier, ladite structure fermée de ladite cloison transversale étanche comprend une pièce cylindrique qui présente une section transversale, dont le périmètre présente la même forme fixe que celui de ladite section transversale de l'enveloppe.

On entend dans la présente description par « périmètre de la section transversale », la ligne en forme de courbe fermée qui délimite la surface plane définie par ladite section transversale.

Le périmètre de la section transversale de l'enveloppe au niveau des cloisons étanches est de forme fixe et ne peut donc pas se déformer par contraction ou par expansion de ladite enveloppe à ce niveau.

Selon différentes variantes de réalisation, ladite section transversale de l'enveloppe est de forme circulaire, ou de forme ovale, ou encore de forme rectangulaire, de préférence avec des angles arrondis.

Dans le cas où le dispositif comporte au moins deux conduites disposées suivant un même plan, la section transversale de ladite enveloppe est de préférence de forme allongée dans la même direction que ce plan.

Plus particulièrement, le périmètre externe de la section transversale de ladite enveloppe de protection est une courbe fermée dont le rapport du carré de la longueur sur la surface qu'elle délimite est au moins égal à 13, comme décrit dans WO 00/04886.

Lors des variations de volume interne, l'enveloppe aura tendance à se déformer vers une forme circulaire, laquelle constitue mathématiquement la forme présentant, à périmètre constant, la surface la plus importante.

Dans le cas d'une enveloppe étanche à profil circulaire, une augmentation de volume engendre des contraintes dans la paroi, lesquelles sont liées à l'augmentation de pression résultante de cette augmentation de volume.

En revanche, si on aplatit la forme de la section transversale du revêtement extérieur, meilleure est la capacité de son enveloppe à absorber les expansions dues à la dilatation des différents composants sous l'effet de la température, sans créer de surpression significative, car l'enveloppe a la possibilité de se remettre au rond.

Dans le cas de profil de forme ovale, une variation de pression interne impliquera une combinaison de contraintes de flexion et de contraintes de traction pure, car la courbure variable de l'ovale se comporte alors comme une voûte architecturale avec cependant la différence que dans le cas de notre enveloppe, les contraintes sont des contraintes de traction et non des contraintes de compression. Ainsi, une forme ovale ou approchée d'une ovale sera envisageable pour de faibles capacités d'expansion et il conviendra de considérer alors des ovales avec un rapport de longueur du grand axe pmax sur celle du petit axe pmin aussi élevé que possible par exemple au moins 2/1 ou 3/1.

On sélectionnera alors la forme de l'enveloppe en fonction de l'expansion globale du volume du revêtement extérieur isolant, sous l'effet de variations de température. Ainsi, pour un système d'isolation utilisant principalement des matériaux sujets à expansion, une forme rectangulaire, une forme polygonale ou encore une forme ovale permet une expansion par flexion de la paroi tout en induisant un minimum de contraintes de traction dans l'enveloppe extérieure.

Pour un matériau isolant présentant une grande expansion sous l'effet de variations de température, tel que du gazole, des produits de la famille des alcanes (paraffines), ou encore des matériaux à changement de phase, on aplatira avantageusement le rectangle pour créer la réserve d'expansion nécessaire. On peut encore augmenter cette réserve d'expansion en créant de façon connue des contre-courbures.

Lesdites cloisons créent des ponts thermiques. On recherche donc à les espacer le plus possible pour réduire les ponts thermiques.

Dans un mode particulier de réalisation, l'espacement entre deux dites cloisons étanches successives selon ledit axe longitudinal ZZ' de ladite enveloppe est de 50 à 200 mètres, notamment de 100 à 150 mètres.

Pour réduire le nombre de cloisons étanches, selon une caractéristique préférentielle, un dispositif selon l'invention comprend au moins un, de préférence une pluralité, de gabarit(s) conformateur(s) disposé(s) transversalement audit axe longitudinal (ZZ') constitué(s) d'une structure rigide ouverte solidaire de la ou desdites conduite(s) et traversée par celle(s)-ci et solidaire de ladite enveloppe à sa périphérie, disposé(s) entre deux dites cloisons étanches successives, de préférence à intervalles réguliers le long dudit axe longitudinal ZZ', ledit gabarit conformateur présentant de préférence des ouvertures permettant le passage de la matière constitutive dudit matériau isolant principal à travers ledit gabarit conformateur.

Comme ladite cloison étanche, ledit gabarit conformateur fige la forme de la section transversale de l'enveloppe au niveau dudit gabarit conformateur, tout en minimisant les ponts thermiques.

Plus particulièrement ladite structure ouverte dudit gabarit conformateur comprend une pièce cylindrique qui présente une section transversale dont le périmètre s'inscrit dans une figure géométrique identique à la figure géométrique définie par la forme du périmètre de la section transversale de ladite cloison étanche.

De préférence, un dispositif selon l'invention comporte une pluralité de gabarits conformateurs disposés le long dudit axe longitudinal ZZ' de l'enveloppe de préférence à intervalles réguliers, deux gabarits conformateurs successifs étant espacés de préférence encore de 5 à 50 mètres, de préférence 5 à 20 mètres.

Dans un mode préféré de réalisation, le dispositif comprend au moins un gabarit centraliseur, de préférence une pluralité de gabarits centraliseurs, disposé(s), transversalement audit axe longitudinal ZZ', de préférence à intervalles réguliers, entre deuxdites cloisons étanches successives et/ou entre deuxdits gabarits conformateurs le long dudit axe longitudinal ZZ', chaque gabarit centraliseur étant constitué d'une pièce rigide solidaire de la ou desdites conduite(s) et présentant une forme qui autorise un déplacement limité de ladite enveloppe, en contraction et en expansion, en regard dudit gabarit centraliseur, et lesdites poches étant disposées entre deux dits gabarits centraliseurs successifs, le cas échéant.

Ce gabarit centraliseur vise à assurer un enrobage minimum en revêtement isolant (3) autour de la ou desdites conduite(s) en cas de déformation par contraction de l'enveloppe et transfert de ladite matière fluable entre les deuxdites cloisons étanches et/ou entre deuxdits gabarits conformateurs.

Plus particulièrement, ledit gabarit centraliseur est constitué d'une pièce rigide, de préférence à surface externe cylindrique, dont le périmètre de la section transversale est en retrait par rapport à celui de ladite cloison étanche, et limite les déformations de ladite enveloppe par butée mécanique directe de celle-ci sur ladite pièce rigide en au moins deux points opposés du périmètre de la section transversale de ladite enveloppe.

Plus particulièrement, ledit gabarit centraliseur présente une section transversale dont le périmètre s'inscrit à l'intérieur d'une figure géométrique qui est sensiblement homothétique par rapport à la figure géométrique définie par le périmètre de la section transversale de ladite cloison étanche.

Dans un mode de réalisation, ladite pièce rigide constituant ledit gabarit centraliseur présente une partie de sa surface externe suffisamment en retrait par rapport à la surface de l'enveloppe, et/ou présente des perforations le traversant, de manière à créer un espace qui permette le transfert de matière constitutive dudit matériau isolant principal à travers ledit gabarit centraliseur.

La distance entre deux gabarits centraliseurs le long dudit axe longitudinal ZZ' est telle qu'elle permet d'assurer de maintenir une quantité de matière constituant ledit revêtement isolant, suffisante pour assurer l'enrobage minimum nécessaire à l'isolation thermique de ladite conduite, compte tenu des déformations en contraction supportées par ladite enveloppe.

Avantageusement, le dispositif selon l'invention comporte une pluralité de gabarits centraliseurs, et deux gabarits centraliseurs successifs sont espacés le long dudit axe longitudinal ZZ' de l'enveloppe d'une distance de 2 à 5 mètres, et lesdites poches étant intercalées entre deux dits gabarits centraliseurs successifs.

La présente invention a plus particulièrement pour objet un dispositif selon l'invention comprenant au moins deuxdites conduites sous-marines disposées en parallèle.

Dans ce cas, avantageusement, lesdites cloisons étanches, de gabarits conformateurs et gabarits centraliseurs maintiennent les au moins deuxdites conduites sous marines à distance fixe l'une de l'autre.

La présente invention a également pour objet un dispositif d'isolation thermique unitaire utile pour obtenir un dispositif selon l'invention par assemblage bout à bout desdits dispositifs d'isolation thermique unitaires, caractérisé en ce qu'il comprend :
- un ou des éléments unitaires de conduite sous marine à la place de la ou des conduite(s) sous marines, et
- une dite enveloppe de protection et un dit revêtement comprenant une dite poche contenant un dit matériau à changement de phase et, tels que définis ci-dessus, chaque dit élément unitaire comprenant à au moins une de ses extrémités ou à chacune de ses extrémités unedite cloison étanche et de préférence desdits gabarits centraliseurs, et de préférence encore des gabarits conformateurs tels que définis ci-dessus, disposés entre deux cloisons étanches successives.

La présente invention a également pour objet un procédé d'assemblage d'un dispositif unitaire selon l'invention, caractérisé en ce qu'il comprend les étapes dans lesquelles :
a) on positionne le cas échéant, le ou les dits éléments unitaires de conduite par rapport à desdites cloisons transversales étanches, dits gabarits centraliseurs et dits gabarits conformateurs, puis
b) on installe desdites cales sur lesdits éléments unitaires de conduite, ou un dit matériau isolant solide contre la paroi dudit élément de conduite unitaire, et
c) on plaque lesdites poches contenant un dit matériau à changement de phase contre lesdites cales ou un dit matériau isolant solide, et
d) on insère l'ensemble ainsi obtenu à l'étape c) dans une dite enveloppe externe, et
e) de préférence, on réalise l'étanchéité au niveau des cloisons transversales étanches que l'on solidarise à l'enveloppe externe, et
f) on injecte, le cas échéant, un dit matériau isolant principal dans l'espace entre lesdites poches et l'enveloppe externe et, le cas échéant, l'espace entre lesdites poches et les parois du ou desdits élément(s) de conduite unitaire(s).

Dans un mode préféré de réalisation dudit procédé d'assemblage, ledit matériau isolant principal est un complexe comprenant différents composants qui sont mélangés, puis injectés à l'état liquide au sein des différents compartiments délimités par deux dites cloisons étanches successives et ledit matériau isolant se transforme en gel par réticulation d'au moins un de ses dits composants.

Ce type de matrice gélifiée a pour effet de limiter la convection.

La présente invention a enfin pour objet un procédé d'isolation thermique d'au moins une conduite sous-marine, caractérisé en ce qu'on réalise des dispositifs d'isolation thermique unitaires décrits ci-dessus, et on assemble bout à bout les dispositifs d'isolation thermique unitaires tels que décrits ci-dessus.

D'autres caractéristiques et avantages de la présente invention ressortiront mieux à la lecture de la description qui va suivre, faite de manière illustrative et non limitative, en référence aux dessins annexés sur lesquels :
Les figures 1, 2 et 3 sont des vues en coupe d'une section transversale d'un faisceau dans la portion des conduites 1 entourées des dites poches 3₂ et dont la section transversale de l'enveloppe est de forme circulaire (figure 1) rectangulaire à bords arrondis (figures 2) et ovale (figure 3).
Les figures 4 et 5 représentent des vues en coupe d'une section transversale d'un faisceau de deux conduites entourées de quatre poches de manière sensiblement continue, avec des cales 4 (figure 4) ou sur des coquilles de mousse syntactique 3₄ (figure 5).
La figure 6 est une vue de côté d'un dispositif selon l'invention dans le cas d'une application dans une colonne montante, illustrant les problèmes de migration de matériau isolant fluide ou semi-pâteux.
Les figures 7, 8 et 9 sont des vues en coupe montrant la section transversale du dispositif au niveau a-b-d et e de la figure 6, respectivement pour chacun des types de dispositifs à enveloppe circulaire (figure 7), enveloppe ovale (figure 8) et enveloppe rectangulaire à angles arrondis (figure 9).
Les figures 10, 11 et 12 représentent les différentes étapes d'obtention d'un dispositif à enveloppe ovale (figure 12) à partir d'un dispositif à enveloppe circulaire (figure 10) en réalisant une déformation au delà de la limite élastique (figure 11).
Les figures 13, 14 et 15 sont des vues en coupe d'une section transversale d'un dispositif à enveloppe ovale, au niveau d'une cloison étanche (figure 13) et au niveau d'un gabarit centraliseur (figures 14 et 15), ladite enveloppe étant en phase de contraction (figure 14) et en phase d'expansion (figure 15).
La figure 16 est une vue de côté d'un dispositif selon l'invention présentant plusieurs cloisons étanches, gabarits centraliseurs et gabarits conformateurs.
Les figures 17, 18 et 19 représentent une vue en coupe d'une section transversale d'un dispositif selon l'invention, comprenant une enveloppe de forme rectangulaire à angles arrondis au niveau d'un gabarit centraliseur, respectivement au repos (figure 17), en configuration d'expansion de l'enveloppe (figure 18) et en configuration de contraction de l'enveloppe (figure 19).
La figure 20 est une vue en coupe longitudinale d'un dispositif selon l'invention présentant des poches de matériau PCM réparties dans la direction longitudinale ZZ' entre une cloison étanche, un gabarit centraliseur et un gabarit conformateur.
La figure 21 représente une vue en section transversale d'un dispositif selon l'invention comprenant une conduite isolée, vue selon le plan AA' de la figure 22.
La figure 22 représente une vue de côté d'un dispositif selon l'invention comprenant une conduite isolée contenue dans une enveloppe externe retenue par des éléments de cerclage externe.

### 1) Réalisation des poches de matériau à changement de phase.

Les poches peuvent être préfabriquées de manière économique en utilisant des matériaux de type polyéthylène, polypropylène, ou tout autre matériau plastique, la mise en forme étant obtenue par injection, par soufflage ou par roto-moulage. L'épaisseur de la paroi dépendra de la résistance du matériau de base employé ; elle sera en général de quelques millimètres de manière à assurer une résistance mécanique suffisante pour la manipulation desdites poches après remplissage intégral et scellement définitif, tout en fournissant la souplesse nécessaire pour absorber par déformation les variations de volume interne.

Dans le cas de PCM dont la composition chimique est incompatible avec le matériau isolant principal, par exemple un PCM à base de sels métalliques et un matériau isolant principal à base de gel, la poche sera avantageusement réalisée à partir d'une feuille de métal ne réagissant pas chimiquement avec ledit PCM, par exemple un acier inoxydable, ladite feuille, par exemple de quelques dixièmes de mm, étant formée par exemple par emboutissage et l'étanchéité périphérique étant assurée par un soudage périphérique continu et étanche. La poche est ensuite remplie intégralement de PCM, puis elle est scellée de manière définitive par soudage d'un bouchon au niveau de son orifice de remplissage.

### 2) Répartition des poches de matériau PCM autour des conduites d'un faisceau de deux conduites.

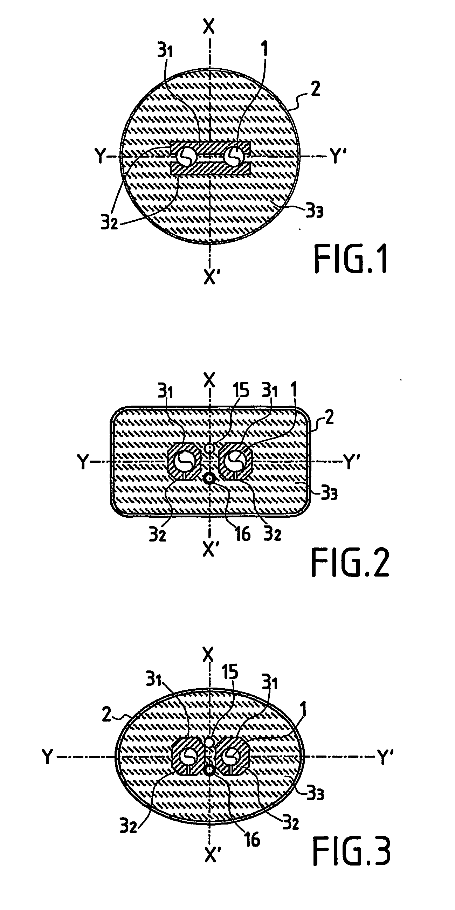

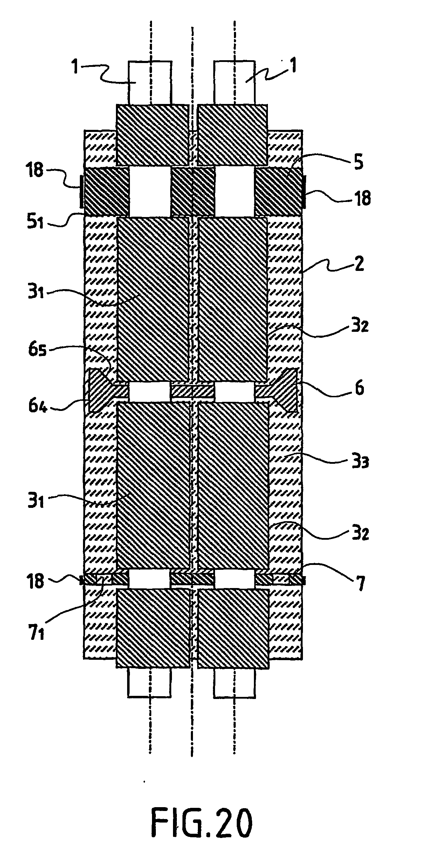

Sur les figures 1 à 5 et 20, on a représenté un dispositif d'isolation thermique vu en coupe transversale (figures 1 à 5) ou vue en coupe longitudinale selon la direction longitudinale axiale ZZ' (figure 20) d'un dispositif d'isolation thermique de deux conduites sous-marines 1 comportant :
- un revêtement isolant comprenant des poches 3₂ d'un matériau à changement de phase (PCM) 3₁ entourant l'ensemble des conduites ou chacune des dites conduites 1, lesdites poches 3₂ de matériau PCM 3₁ étant elles-même entourées d'un matériau isolant principal 3₃,
- ledit revêtement isolant étant recouvert d'une enveloppe étanche de protection 2, et
- ladite enveloppe étant de forme tubulaire et présentant un axe longitudinal de symétrie ZZ', la section transversale de ladite enveloppe 2 définissant un périmètre présentant deux axes de symétrie XX' et YY' perpendiculaires entre eux et audit axe longitudinal ZZ'.

Le matériau isolant principal 3₃ est un matériau sujet à migration tel que décrit ci-après.

Sur les figures 2 et 3, chacune des dites conduites 1 est entourée par une seule poche 3₂ de sorte que dans une section transversale de ladite conduite au niveau de la ou des dites poche(s), chacune desdites conduites se trouve entièrement entourée de façon sensiblement continue par la ou lesdites poche(s). Le seul espace résiduel 3₅ entre lesdites poches étant destiné à permettre, le cas échéant, l'injection d'un matériau isolant principal 3₃ entre les conduites 1 et lesdites poches comme décrit plus loin.

Sur les figures 1 et 4 - 5, on a montré une section transversale d'un faisceau de deux conduites, l'ensemble des deux conduites étant entouré par un ensemble respectivement de deux et quatre poches réparties et assemblées autour de l'ensemble des deux conduites de manière sensiblement continue.

Sur les figures 2 et 3, chacune des conduites est entourée d'une seule poche repliée sur elle même de telle manière que les arêtes longitudinales soient situées face à face, de préférence proches l'une de l'autre de manière à former un C. Ainsi, lors des variations de volume de la poche, la poche peut se déformer et le C a alors tendance à s'ouvrir.

Sur la figure 1, l'enveloppe extérieure 2 est circulaire et réalisée dans un matériau thermoplastique souple.

Sur les figures 2, 4 et 5, l'enveloppe extérieure 2 présente une section transversale ayant la forme d'un rectangle à bords arrondis et sur la figure 3, en forme d'ellipse.

Dans les figures 2 à 5, l'enveloppe extérieure 2 peut être réalisée en tôle d'acier ou en matériau composite.

Sur les figures 1 à 5, on a également représenté à l'intérieur du faisceau une conduite auxiliaire de réchauffage 15 et une conduite d'injection d'eau ou un câble électrique 16.

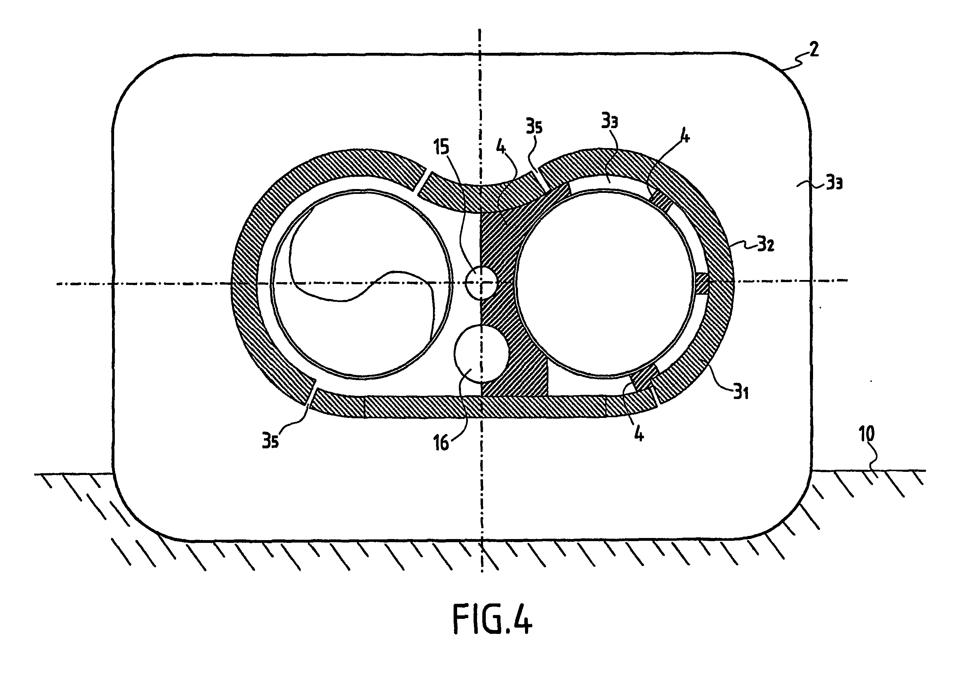

Sur la figure 4, les poches 3₂ sont disposées sur des cales 4 reposant et réparties autour des conduites 1 représentées seulement sur la partie droite de la figure 4. Lesdites cales 4 permettent de laisser un espace entre les poches 3₂ et la paroi des conduites 1 de quelques centimètres, par exemple de 3 cm. Ledit espace ainsi créé entre les cales 4 et la conduite 1 constitue ainsi une isolation et permet d'éviter un transfert trop rapide de calories en provenance du fluide circulant dans les conduites 1, vers le matériau PCM, lors de la phase de redémarrage de l'installation, après un arrêt de la production. Pour ce faire avantageusement, on remplit l'espace entre les poches 3₂ et la conduite 1 par un matériau isolant, qui peut être sur la figure 4, le matériau isolant principal 3₃ décrit ultérieurement, à savoir un produit de type gel qui est injecté sous forme liquide avant de se réticuler in situ.

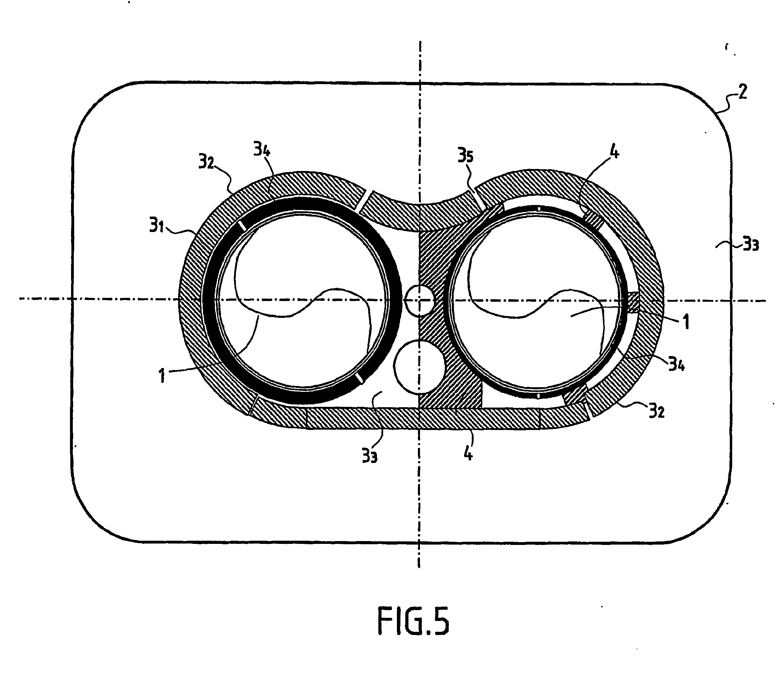

Sur la figure 5, on a représenté à gauche un autre mode de réalisation dans lequel les poches 3₂ reposent directement sur des coquilles de mousse syntactique 3₄ disposées directement contre les parois de la conduite 1. Sur la figure 5, à droite, les coquilles de mousse syntactique reposent directement sur ladite conduite, et lesdites poches 3₂ , sur des cales 4. L'espace entre la conduite et les deux coquilles de mousse syntactique 3₄ est ainsi plus facilement rempli à l'aide de matériau isolant principal 3₃, ce remplissage est rendu possible par injection dudit matériau isolant dans des ouvertures situées dans la direction longitudinale ZZ' et non représentées dans la coupe transversale de la figure 5 comme il sera explicité ultérieurement

Ces coquilles minces de mousse syntactique peuvent avoir une épaisseur de quelques millimètres, par exemple 12 mm, et constituent un isolant complémentaire à haute performance et résistant à la pression.

Sur les figures 4 et 5, on a représenté un "bundle" destiné à reposer au fond de la mer 10. Le coefficient d'échange thermique du "bundle" avec l'extérieur est plus faible dans la zone en sous-face en contact direct avec le sol marin, ce dernier étant plus isolant que l'eau en circulation en général à 4°C dans la partie supérieure ou les parties latérales du "bundle" en contact avec l'eau. C'est pourquoi, tel que représenté sur les figures 4 et 5, l'épaisseur de matériau PCM 3₁ inclus dans la poche en sous-face des conduites 1, peut être réduite par rapport à l'épaisseur des autres poches 3₂ entourant les conduites 1 sur les côtés et sur le dessus. On optimise ainsi avantageusement la répartition du matériau PCM autour des conduites en fonction des besoins en calories.

### 3) Répartition des poches de matériau PCM entre des cloisons étanches disposées le long de la direction longitudinale ZZ'.

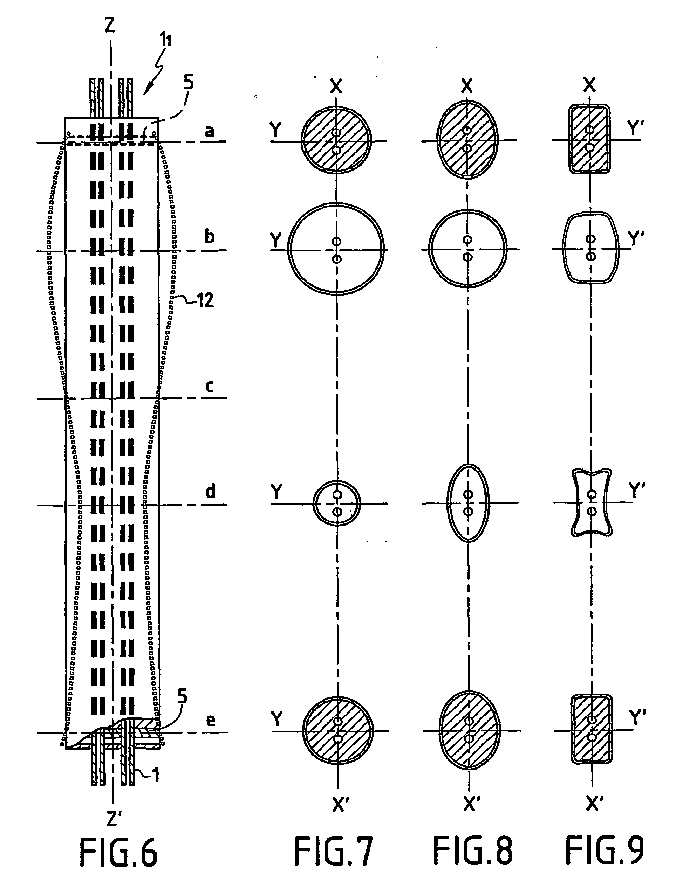

Sur les figures 6, 16 et 20, on a représenté des vues en coupe longitudinale selon l'axe ZZ' d'un dispositif d'isolation thermique de deux conduites sous-marines 1 comportant :
- un revêtement isolant thermique 3₁ - 3₃ entourant la ou lesdites conduite(s),
- ledit revêtement étant recouvert d'une enveloppe externe étanche de protection 2, et ladite enveloppe 2 étant constituée d'un matériau souple ou semi-rigide apte à rester au contact de la surface extérieure dudit revêtement isolant 3 lorsque celui-ci se déforme,
- ladite enveloppe étant de forme tubulaire et présentant un axe longitudinal de symétrie ZZ', la section transversale de ladite enveloppe définissant un périmètre présentant deux axes de symétrie XX' et YY' perpendiculaires entre eux et au dit axe longitudinal ZZ'. Dans ces vues en coupe longitudinale selon l'axe ZZ', on a représenté des cloisons transversales étanches 5, chacune desdites cloisons étant constituées d'une structure rigide fermée traversée par la ou lesdites conduite(s), et solidaires de la ou desdites conduite(s) et de ladite enveloppe, et lesdites poches étant disposées autour de la ou desdites conduite(s) entre les deux dites cloisons transversales.

La figure 6 est une vue de face d'une portion de colonne montante ou « riser » isolée thermiquement 1₁, comportant une enveloppe extérieure 2 soit en matériau thermoplastique, soit en acier ou encore en matériau composite, dont la section peut être circulaire comme détaillé sur la figure 7, ou elliptique comme détaillé sur la figure 8, ou encore rectangulaire à bords arrondis comme détaillé sur la figure 9.

Ladite portion de colonne montante 1₁ comporte deux conduites 1 installées vers le centre ainsi qu'en partie supérieure (a) et en partie inférieure (b) une cloison étanche 5 servant à confiner, en coopération avec l'enveloppe externe 2, le matériau isolant 3. Ladite cloison étanche 5 supporte lesdites conduites 4 et les maintient à distance fixe l'une de l'autre et à distance fixe de la paroi.

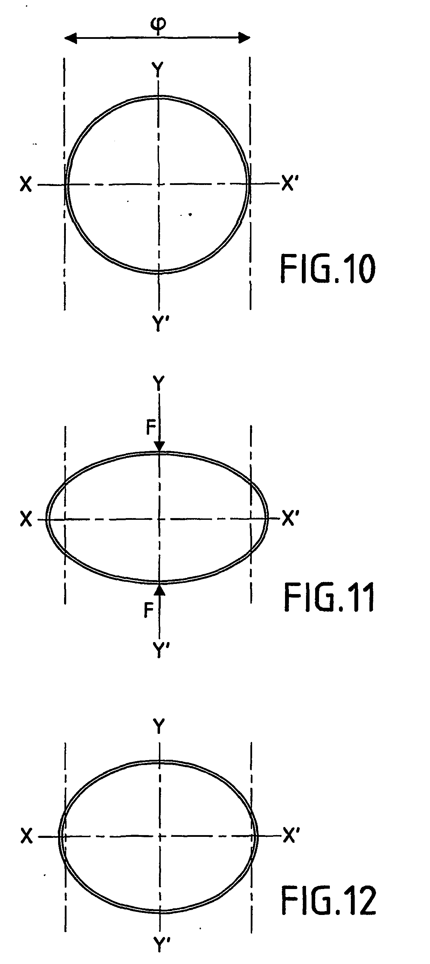

Les figures 10, 11 et 12 représentent la section de l'enveloppe externe en acier d'un bundle, respectivement de forme circulaire après fabrication (figure 10), puis déformée au delà de la limite élastique, à la presse sous un effort F (figure 11), ce qui constitue alors, après relâchement de l'effort F, l'enveloppe extérieure d'un « bundle plat » de section sensiblement ovale (figure 12).

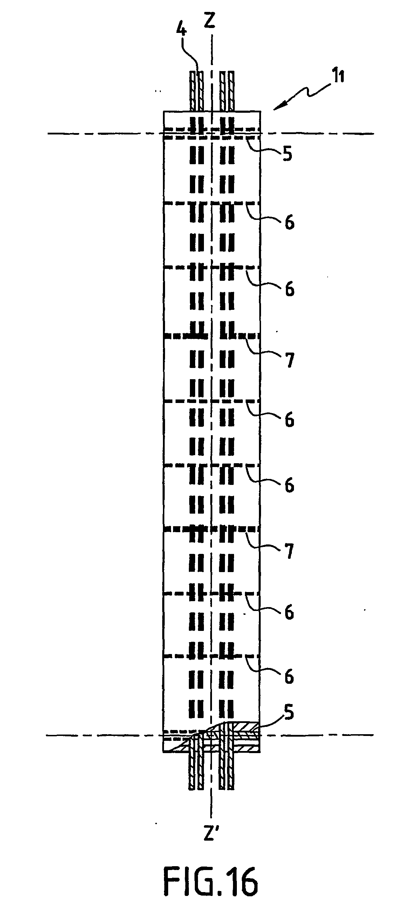

Sur les figures 6 et 16, on a représenté une portion ou tronçon d'un dispositif d'isolation thermique 1₁ dénommé ci-dessus dispositif d'isolation thermique unitaire, qui comprend deux cloisons étanches 5, et une pluralité de gabarits centraliseurs 6 ou gabarits conformateurs 7. Les cloisons étanches 5, gabarits centraliseurs 6 et gabarits conformateurs 7, sont des pièces rigides de forme cylindrique comme représenté sur la figure 20.

Sur les figures 7, 8, 9 et 13, la pièce rigide constituant la cloison étanche présente une section transversale de même forme que celui de la section transversale de l'enveloppe. La cloison étanche 5 est traversée par les conduites 1. La liaison entre la cloison étanche et les conduites 1 est elle aussi étanche, ce qui rend possible le confinement sans fuite au sein de l'enveloppe du matériau isolant. La cloison étanche 5 possède une résistance mécanique telle qu'elle fige la section de l'enveloppe extérieure à ce niveau (niveaux a et e figure 6). La surface externe cylindrique 5₁ de la pièce rigide constitutive de la cloison étanche 5 est collée ou soudée à l'enveloppe, mais avantageusement, elle peut être également en complément encerclée par un feuillard de cerclage extérieur 18 à l'extérieur de l'enveloppe à ce niveau.

Lesdites cloisons étanches 5 sont des structures distinctes de ladite enveloppe 2, laquelle présente une continuité dans la direction longitudinale entre deux points situés de part et d'autre de ladite cloison.

Dans l'espace confiné entre deux cloisons étanches 5 dudit tronçon 1₁ sont disposés d'une part les gabarits centraliseurs 6 et d'autre part des gabarits conformateurs 7.

Les gabarits centraliseurs 6 sont disposés de préférence à intervalles réguliers, par exemple d'une distance de 2 à 5 mètres. Ils sont également composés d'une pièce rigide solidaire des conduites internes 1, la forme des gabarits centraliseurs autorise un déplacement limité de l'enveloppe 2 en contraction et en expansion au regard dudit gabarit centraliseur 6, plus particulièrement ledit déplacement de l'enveloppe 2 en regard d'undit gabarit centraliseur 6, représente une variation de 0,1 à 10 %, de préférence de 0,1 à 5 %, de la distance entre deux points opposés 2₁-2₂, 2₃-2₄ du périmètre de la section transversale de ladite enveloppe.

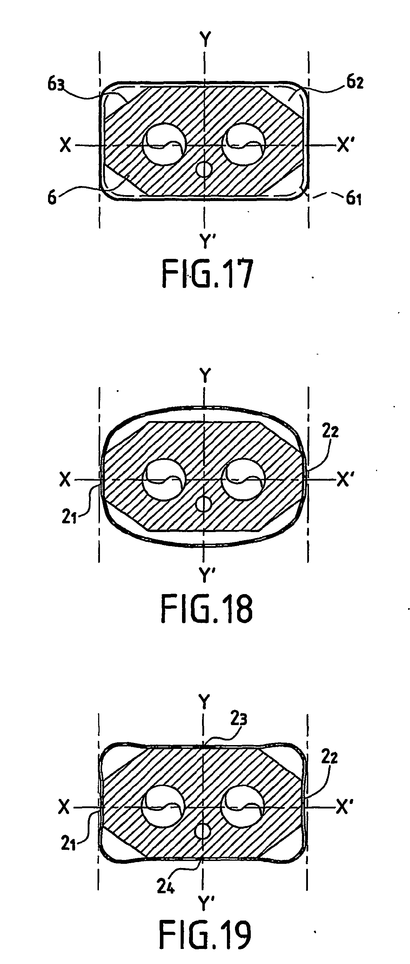

Sur les figures 17 à 19, ladite section transversale dudit gabarit centraliseur 6 a la forme d'un rectangle dont les angles sont tronqués en pans coupés 9₁.

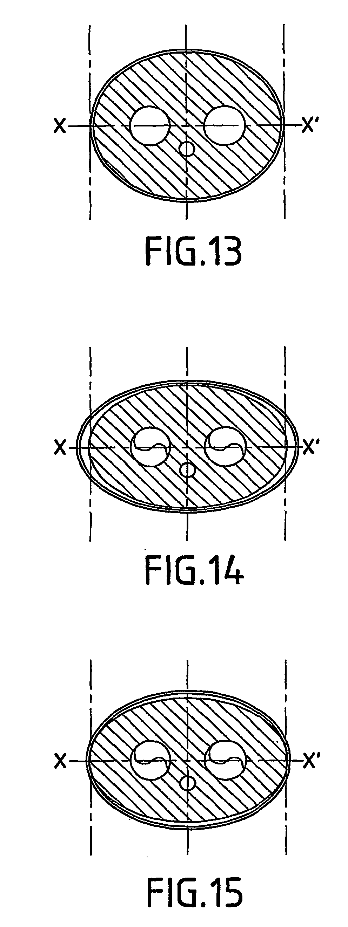

Sur les figures 14 et 15 et 17 à 19, le gabarit centraliseur 6 présente une section transversale dont le périmètre s'inscrit à l'intérieur d'une première figure géométrique 6₁ de forme d'un rectangle à bords arrondis (figure 17), de forme ovale (figure 14), qui est sensiblement homothétique par rapport à la figure géométrique définie par le périmètre de la section transversale de la cloison étanche avec laquelle il coopère.

Sur les figures 18 et 19, on montre que le périmètre de la section transversale du gabarit centraliseur 6 est en retrait par rapport à celui de la cloison étanche et donc de l'enveloppe au repos (figure 13) et limite les déformations (figures 18 et 19) de ladite enveloppe par butée mécanique directe de celle-ci en au moins deux points opposés 2₁ - 2₂, 2₃ - 2₄ du périmètre de la section transversale de ladite enveloppe.

Sur la figure 20, on a représenté les poches 3₂ disposées dans la direction longitudinale ZZ' entre une cloison étanche 5 et un gabarit centraliseur 6 d'une part, et entre un gabarit centraliseur 6 et un gabarit conformateur 7 d'autre part.

Les poches 3₂ sont remplies d'un matériau à changement de phase 3₁ et entouré d'un matériau isolant principal 3₃ fluide ou pâteux et donc sujet à migration.

En cas de surpression de l'intérieur de l'enveloppe par rapport à l'extérieur (voir zone b figures 6 et 18), si l'enveloppe 2 n'est pas circulaire et présente une forme aplatie, notamment ovale ou rectangulaire avec un grand axe de symétrie XX' et un petit axe de symétrie YY' perpendiculaires entre eux et situés dans le plan de section transversale, le périmètre de la section transversale de l'enveloppe tend à se circulariser. Dans ces conditions, la butée mécanique et donc le contact de l'enveloppe avec ledit gabarit centraliseur se fait alors seulement en des points opposés 2₁, 2₂ de ladite enveloppe située sur le plus grand axe de symétrie XX', de sorte que l'expansion de ladite enveloppe selon le petit axe de symétrie YY' se trouve également limitée (voir zone b des figures 6 et 18) et la section transversale de ladite enveloppe peut ainsi rester de forme aplatie (non circulaire).

En revanche, en cas de surpression de l'extérieur de l'enveloppe par rapport à l'intérieur de l'enveloppe, la butée mécanique et le contact de l'enveloppe avec ledit gabarit centraliseur se fait à la fois en des points opposés 2₁, 2₂ de ladite enveloppe située sur le plus grand axe de symétrie XX' et en des points opposés 2₃, 2₄ de ladite enveloppe située sur le plus petit axe de symétrie YY' dans le plan de section transversale, de sorte que la contraction de ladite enveloppe se trouve limitée (voir zone d des figures 6 et 19). On évite ainsi une implosion éventuelle de l'enveloppe en ces points.

Le gabarit centraliseur 6 présente avantageusement à sa périphérie principalement dans les zones de contact avec l'enveloppe une surface de contact suffisamment large 6₄ de manière à éviter les endommagements de l'enveloppe extérieure 2 lorsque le bundle respire. En revanche, la partie centrale du gabarit centraliseur peut être évidée 6₅, comme représenté figure 20, de manière à minimiser les ponts thermiques tout en conservant suffisamment de matière pour conserver au gabarit centraliseur une rigidité suffisante.

Les gabarits conformateurs 7 sont des pièces rigides cylindriques d'épaisseur plus petite, dont la fonction est, comme les cloisons étanches 5, de fixer la forme de la section transversale de l'enveloppe à leur niveau, cette section étant de préférence identique à celle imposée par la cloison étanche 5. La surface de contact de la tranche périphérique du cylindre constitutif de la pièce, est donc , comme représenté figure 20, de hauteur moins importante que pour les gabarits centraliseurs ou les cloisons étanches de manière à minimiser les ponts thermiques, mais comme les cloisons étanches, elles sont rendues solidaires de l'enveloppe par collage ou soudage, et de préférence par cerclage avec un feuillard de cerclage extérieur à l'enveloppe 18.

Le gabarit conformateur 7 n'est pas étanche car il comporte des ouvertures 7₁ qui laissent passer le matériau isolant, surtout lors de la phase de remplissage de matériau isolant principal 3₃, ce dernier étant fluide ou pâteux et présentant de préférence une viscosité très faible. Le gabarit conformateur 7 est solidaire des conduites internes 1 et maintient à distance fixe l'une de l'autre comme les cloisons étanches 5 et les gabarits centraliseurs 6. Le gabarit conformateur 7 maintient en outre les conduites internes 1 à distances fixes de l'enveloppe 2 au niveau du gabarit conformateur 7.

Les gabarits conformateurs 7 successifs sont espacés de préférence d'une distance de 5 à 50 mètres, de préférence de 5 à 20 mètres, la surface externe desdites pièces rigides cylindriques constituant ladite cloison étanche 5 ou ledit gabarit conformateur 7 sont en contact continu avec ladite enveloppe 2. Il faut comprendre par l'expression « contact continu» que ledit contact est réalisé sur toute la circonférence du périmètre de la section transversale de ladite enveloppe.

Sur les figures 7, 8 et 9, on a représenté à chacun des niveaux a, b, d et e respectivement pour chacun des types d'enveloppes circulaires ovales ou rectangulaires, et de manière considérablement amplifiée, des déformations engendrées par la pression différentielle entre l'intérieur du dispositif et le milieu ambiant entre deux cloisons étanches localisées respectivement aux niveaux a et e. La pression différentielle s'exerçant sur l'enveloppe 2 est due à la différence de densité du matériau isolant par rapport à l'eau de mer, ladite densité étant en général aux alentours de 0.8 à 0.85. Ainsi, à titre d'illustration, si l'on considère une portion de colonne montante 1 de 100m, pour un matériau isolant principal 3₃ de densité 0.8, la pression différentielle entre le haut et le bas sera de 0.2Mpa, la partie basse (niveau d figure 6) de ladite colonne montante se trouvant en dépression, tandis que la partie haute se trouvera en surpression. Il en résultera une déformation de l'enveloppe extérieure 2 dont le résultat est sensiblement comparable dans chacune des configurations selon les figures 7, 8 et 9. La dépression en partie basse aura tendance à contracter l'enveloppe, comme illustré entre le plan e et le plan d, où la section est minimale, pour ensuite croître vers un maximum en b, puis décroître vers la section nominale imposée par la cloison 5. Selon le type de bundle, les déformations sont illustrées dans les plans a - b - c - d - e relatifs aux figures 7 à 9.

Ces déformations de l'enveloppe externe vont engendrer des transferts vers le haut du matériau isolant semi-fluide ou pâteux consistant en ledit matériau isolant principal 3₃ et:ou ledit matériau isolant à changement de phase 3₁ contenu dans lesdites poches 3₂ , ce qui risque de nuire au bon comportement de l'isolant, voire d'en détruire la structure physique, car ces types de matériaux d'isolation sujets à migration restent fragiles et supportent mal les cisaillements internes créés par les migrations internes.

Dans le cas de la figure 7 représentant l'enveloppe circulaire 2 en matériau thermoplastique, l'expansion en b est importante, mais la contraction observée en d reste très faible, car la dépression existante a des répercussions moindres sur la forme finale.

A ce phénomène de transfert de fluide vers le haut, vient s'ajouter le phénomène de respiration décrit précédemment, dû aux variations de température des conduites internes lesquelles engendrent des variations de volumes, principalement au sein du complexe isolant, qui viennent amplifier les déformations, surtout dans la partie haute.

Lorsqu'il se produit un transfert de matière d'un dit matériau isolant par migration dans ladite direction longitudinale ZZ', en général dans le sens de bas en haut dans le cas où ladite conduite est une colonne montante ou riser ou en déclivité, la forme du périmètre de la section transversale de ladite enveloppe 2 n'est pas uniforme le long de l'axe longitudinal de symétrie ZZ' et ladite forme fixe du périmètre de la section transversale de ladite cloison étanche 5 correspond alors à la forme de la section transversale de ladite enveloppe, avant ledit transfert de matière, c'est à dire lorsque ledit revêtement isolant 3₁ - 3₃ est uniformément réparti autour de ladite conduite le long dudit axe longitudinal ZZ' et que ladite forme de la section transversale de l'enveloppe le long dudit axe longitudinal est également uniforme.

Lorsque se produisent des déformations de l'enveloppe 2 et de la forme de la surface extérieure du revêtement isolant 3₁ - 3₃, la forme du périmètre de ladite section transversale de l'enveloppe reste en général symétrique par rapport à deuxdits axes XX', YY' perpendiculaires entre eux et perpendiculaires audit axe longitudinal de symétrie ZZ' de l'enveloppe.

Les cloisons étanches, gabarits centraliseurs 6 et conformateurs 7 sont réalisées de préférence à partir de matériaux résistants et peu conducteurs de la chaleur, par exemple en matériaux thermoplastiques, renforcés ou non, en matériaux composites, ou même partiellement en métal, et avantageusement en une combinaison de ces différentes technologies.

Les plus grands diamètres des cloisons étanches, gabarits centraliseurs et gabarits conformateurs de leur section transversale de l'ordre de 1 m à 1,5 m, voire 2m, conformément à la taille globale des dispositifs selon l'invention correspondant également à des épaisseurs d'enveloppe de l'ordre de 15 à 40mm dans le cas d'enveloppes souples en thermoplastiques de type polyéthylène ou polypropylène et de 5 à 8mm dans le cas d'enveloppe semi rigide en acier ou en matériau composite, et des diamètres de conduites de l'ordre de 100mm à 400mm.

### 4) Répartition des poches dans un dispositif d'isolation comprenant une seule conduite et dépourvue de gabarit centraliseur et gabarit conformateur.

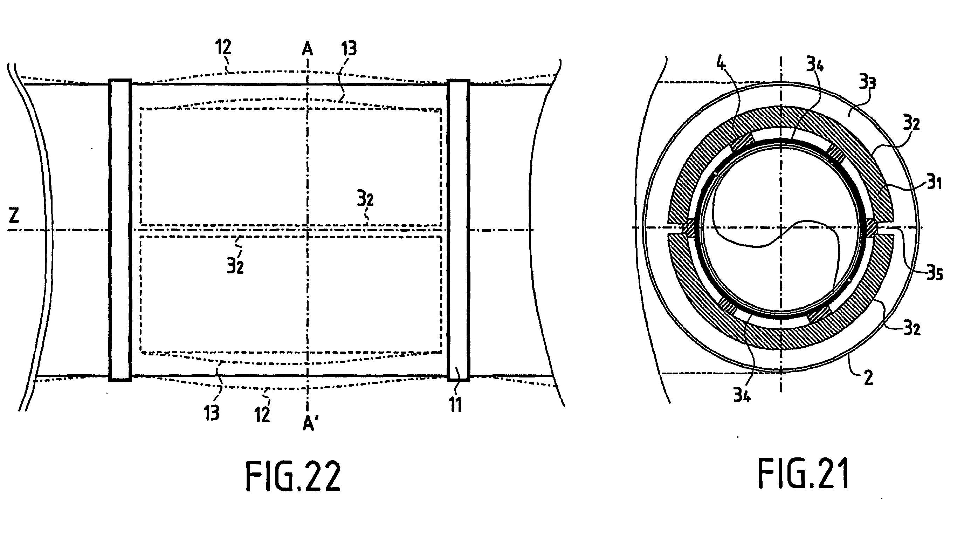

Sur les figures 21 et 22, on a représenté un dispositif d'isolation thermique selon l'invention comprenant une seule conduite sous-marine 1 dépourvue de gabarits conformateurs ou gabarits centraliseurs dans la mesure où l'enveloppe souple externe 2 est maintenue en position par des éléments de cerclage 11 qui empêchent une trop grande déformation de l'enveloppe lors de la migration éventuelle dudit matériau isolant principal 3₃ et matériau à changement de phase 3₁ contenu dans les poches 3₂.

Sur les figures 21 et 22, on a représenté un dispositif selon l'invention comprenant une conduite isolée contenue dans une enveloppe externe souple de type polyéthylène 2. la conduite est recouverte d'un premier système d'isolation constitué de deux demi-coquilles de mousse syntactique 3₄ collées sur la paroi externe de ladite conduite 1. Ces coquilles de mousse syntactique sont entourées de deux poches 3₂ également en forme de demi-coquilles et contenant un matériau PCM 3₁. Ces poches 3₂ sont elles-même maintenues à distance des dites coquilles de mousse syntactique 3₄ par des cales 4 collées sur les dites coquilles de mousse syntactique.

Les poches 3₂ sont maintenues sur les coquilles de mousse syntactique 3₄ par des sangles non représentées.

Comme représenté sur la vue longitudinale de la figure 22, les poches 3₂ ne sont pas incorporées entre des gabarits centraliseurs ou gabarits conformateurs. En effet, l'enveloppe extérieure 2 est ici rendue solidaire de ladite conduite 1 par des cloisons transversales 5 (non représentées), étanches ou non, situées en regard d'éléments de cerclage 11, extérieurs à l'enveloppe 2.

L'enveloppe externe est intégralement remplie d'un matériau isolant principal 3₃, et l'espacement des poches 3₂ par rapport aux coquilles syntactiques 3₄ vise à faciliter un remplissage complet de tout espace résiduel à l'intérieur de l'enveloppe 2. L'enveloppe externe 2 étant déformable, peut sans engendrer d'augmentation significative de la pression interne par rapport à la pression du fond de la mer, se déformer selon la courbe 12 pour absorber les phénomènes de variation interne de volume 13 des poches 3₂, lesdites variations étant positives ou négatives.

Comme représenté sur les figures 21 et 22, on voit que les poches sont également réparties et espacées de façon sensiblement continue le long de la direction longitudinale ZZ' autour de ladite conduite 1 de manière à éviter également la création de points froids entre deux poches consécutives disposées le long de la direction longitudinale ZZ'.

### 5) Procédé d'assemblage d'un dispositif d'isolation thermique d'une conduite et installation en mer de ladite conduite.

L'assemblage de tronçons unitaires 1 pour former un faisceau continu de plusieurs kilomètres peut s'effectuer par exemple de la manière suivante. On fabrique d'abord un premier tronçon, par exemple de 100m de longueur tel que représenté sur la figure 16 et équipé de ses cloisons étanches. Pour cela, on fabrique les conduites internes à partir de longueurs de tube de 12m raboutés par soudage. Puis, on installe, au fur et à mesure, les gabarits centraliseurs 6 et les gabarits conformateurs 7, lesdits gabarits centraliseurs et gabarits conformateurs étant équipés par exemple de roulettes ou patins en partie basse. Le cas échéant, on installe des cales 4 sur lesdites conduites 1 entre gabarits centraliseurs 6 et gabarits conformateurs 7, et on y plaque des poches 3₂ contre lesdites cales 4 à l'aide de sangles non représentées.

On insère alors l'ensemble à l'intérieur de l'enveloppe externe 2 en poussant cette dernière qui a été préfabriquée en un seul élément ou par raboutage d'éléments unitaires d'enveloppe de 12m, 24m ou plus, ledit raboutage s'effectuant de préférence loin de l'extrémité des conduites intérieures. Lorsque l'enveloppe externe est en place, on installe lesdites cloisons étanches 5 à chaque extrémité que l'on solidarise à l'enveloppe 2 et aux conduites 1 et on injecte le matériau isolant principal 3₃ entre les cloisons étanches dans l'espace résiduel entre les conduites 1 et les poches 3₂ et l'espace résiduel entre les poches 3₂ et l'enveloppe 2. On aura pris soin de laisser dépasser, du côté que l'on doit rallonger, l'enveloppe externe d'une certaine longueur, par exemple 20cm, et les conduites internes 1, par exemple, la première de 1 m et la seconde de 1.5m, de manière à ce que les zones où l'on devra effectuer les raccordements par soudage soient décalées les unes des autres, ce qui permettra l'accès aux équipements de soudage et de contrôle. On tire alors le tronçon préfabriqué vers la mer pour libérer la zone de travail et on fabrique alors le tronçon suivant de manière similaire. Lorsque l'on met en place en place l'enveloppe externe 2 autour du nouveau tronçon, elle est mise en face à face avec l'enveloppe en attente à une extrémité du tronçon précédent puis soudée. A l'autre extrémité, on installe une cloison étanche 5 que l'on solidarise à ladite enveloppe extérieure et aux conduites, puis on procède au remplissage de matériau isolant. On aura pris soin de laisser dépasser les conduites 1 avec un décalage suffisant par rapport à l'enveloppe externe comme décrit ci-dessus, de manière à faciliter les opérations de soudage et de contrôle, et l'on recommence l'opération jusqu'à l'obtention d'une longueur suffisante.

Si des câbles électriques ou des ombilicaux doivent être installés au sein du dispositif, on ajoutera une conduite supplémentaire jouant le rôle de fourreau et le câble ne sera tiré à travers ledit fourreau qu'après assemblage complet de la longueur complète de faisceau, lequel peut atteindre plusieurs kilomètres.

Lorsque l'intégralité de la ligne par exemple 2500 m a été fabriquée et tirée vers la mer, elle est remorquée vers le site d'installation qui peut être distant de plusieurs centaines de kilomètres. Ensuite, elle est soit mise en place sur le fond, soit redressée en position verticale pour être solidarisée à une embase d'ancrage, dans le cas d'une tour riser hybride, soit encore installée en simple configuration de chaînette et suspendue à un support flottant ancré en surface.

### 6) Injection d'un matériau isolant principal 3₃ à l'intérieur de l'enveloppe.

Dans une version préférée de l'invention, le matériau isolant principal 3₃ est avantageusement réalisé à partir d'un gel réticulé présentant une grande stabilité, par exemple un composé de type polyuréthanne ou de type silicone, dont la réticulation créant un gel sensiblement continu, joue le rôle de matrice, au sein duquel se trouve, en dispersion, un liquide tel une paraffine, un gazole, ou tout autre composé présentant un niveau de conductibilité thermique faible. On incorporera avantageusement encore au matériau isolant principal 3₃, lors de sa fabrication, des composés solides, par exemple des micro-sphères de verre, dont le rôle est de diminuer la conductivité thermique du complexe, ou des matrices fibreuses dont le rôle est de réduire la convexion des particules restant à l'état liquide au sein dudit matériau isolant principal 3₃.

Les divers composants sont alors mélangés puis malaxé de manière énergique pour obtenir un composé homogène qui peut alors être injecté sous forme liquide et remplir ainsi l'intégralité de l'espace résiduel vide du tronçon limité par deux cloisons étanches consécutives. Préalablement à l'injection du matériau isolant principal 3₃ fluide, on tirera avantageusement au vide de tronçon, de manière à éviter toute poche de gaz résiduel. Le vide créé ne manquera pas de faire imploser localement l'enveloppe, mais cette dernière reprendra sa forme initiale dès que l'on aura injecté la quantité nécessaire et suffisante de fluide. On aura bien sûr pris la précaution de dimensionner les conformateurs 7 et centraliseurs 6, et de les rapprocher suffisamment pour que cette implosion temporaire soit sans répercussion significative sur l'intégrité de l'enveloppe extérieure 2 .

Le produit homogénéisé ainsi injecté se trouve à l'état liquide lors de la phase de remplissage et après réticulation du liant, se transforme en une matrice gélifiée au sein de laquelle se trouve emprisonnée le ou les autres constituants restant à l'état liquide ou eux aussi à l'état de gel, ce qui réduit de façon très importante les phénomènes de convexion.

On choisira de préférence les composants liants, par exemple les polyuréthannes ou les composés à base de silicones, de manière à ce que la polymérisation ne démarre qu'après plusieurs heures, par exemple une durée minimale 6 à 8 heures, ce qui permet, avec des moyens de mélangeage et de pompage raisonnables de réaliser dans ce laps de temps des dispositifs de 1m de diamètre en tronçons unitaires de 100m environ.

On pourrait tout aussi bien réduire cette longueur unitaire ou l'augmenter en considérant des moyens d'injection plus faibles ou plus importants, ou encore utiliser des composants, additionnés ou non de retardateurs, dont le temps d'ouverture, c'est à dire le temps pendant lequel il peut être mis en oeuvre, est plus faible ou plus important, l'essentiel étant que l'intégralité de l'opération d'injection doit être terminée avant que la réaction de gélification ou de réticulation du liant ne soit initiée de manière significative.

En procédant ainsi, on simplifie de manière considérable le remplissage du bundle, car on évite les tâches compliquées de l'art antérieur qui consistaient à installer des matrices absorbantes et à faire percoler le fluide isolant, ou encore à injecter à chaud un complexe isolant tel de la paraffine, sujet à rétractation importante lorsqu'il passe de l'état liquide à l'état solide.

## Revendications

1. Dispositif d'isolation thermique d'au moins une conduite sous-marine (1) comportant :
- un revêtement isolant thermique (3₁ - 3₃) entourant la ou lesdites conduite(s),
- ledit revêtement étant recouvert d'une enveloppe externe étanche de protection (2), et ladite enveloppe (2) étant constituée d'un matériau souple ou semi-rigide apte à rester au contact de la surface extérieure dudit revêtement isolant (3) lorsque celui-ci se déforme,
**caractérisé en ce que** :
- le dit revêtement isolant comprend un matériau à changement de phase, de préférence un matériau isolant à changement de phase (3₁) confiné dans au moins une poche (3₂) réalisée dans un matériau souple ou semi-rigide déformable, et
- la ou lesdites poche(s) (3₂) étant disposée(s) autour de la ou lesdites conduite(s) (1).

2. Dispositif d'isolation selon la revendication 1, **caractérisé en ce que** dans une section transversale de la ou desdites conduite(s) (1), au niveau de la ou desdites poche(s) (3₂), la ou lesdites conduite(s) se trouve(nt) entourée(s) par la ou lesdites poche(s) de manière sensiblement continue.

3. Dispositif d'isolation selon la revendication 1 ou 2, **caractérisé en ce que** lesdites poches (3₂) sont placées à proximité de la conduite (1) de manière à ce qu'au moins une partie, de préférence la totalité de la ou desdites poche(s) (3₂) ne soit pas directement en contact avec celle-ci.

4. Dispositif selon la revendication 3, **caractérisé en ce que** lesdites poches sont disposées contre des cales (4), lesdites cales étant disposées contre et autour de ladite conduite (1) de manière à laisser un espace entre lesdites poches et ladite conduite (1).

5. Dispositif selon l'une des revendications 2 à 4, **caractérisé en ce que** lesdites poches (3₂) sont espacées de ladite conduite d'une distance de 5 mm à 10 cm, de préférence de 1 à 5 cm.

6. Dispositif d'isolation selon l'une des revendications précédentes, **caractérisé en ce que** ladite conduite (1) est entourée par un second matériau isolant solide (3₄) appliqué contre ladite conduite (1), de préférence sous forme de coquille de mousse syntactique, lesdites poches (3₂) étant appliquées contre ledit matériau isolant solide (3₄) entourant ladite conduite (1).

7. Dispositif selon l'une des revendications 1 à 6, **caractérisé en ce que** ledit revêtement isolant recouvert d'une dite enveloppe étanche de protection (2) comprend un matériau isolant principal (3₃), de préférence, un gel isolant disposé entre ladite enveloppe externe (2) et la ou lesdites poche(s) (3₂) de matériau à changement de phase entourant la ou lesdites conduite(s) (1).

8. Dispositif d'isolation selon la revendication 7, **caractérisé en ce que** ledit matériau isolant principal (3₃) entoure la ou lesdites conduite(s) (1) et assure la séparation entre la ou lesdites conduite(s) et lesdites poches (3₂) dans l'espace séparant la ou lesdites poche(s) et la ou lesdites conduite(s).

9. Dispositif d'isolation selon l'une des revendications 1 à 8, **caractérisé en ce que** dans les portions de la ou les conduite(s) entourée(s) desdites poches (3₂), le dispositif comprend au moins deux, de préférence trois ou quatre poches dans une dite section transversale de la ou desdites conduite(s) entourée(s) par desdites poches (3₂), de préférence encore entourant la ou lesdites conduite(s) de façon sensiblement continue.

10. Dispositif d'isolation selon l'une des revendications 1 à 9, **caractérisé en ce que** ledit matériau à changement de phase (3₁) présente une température de fusion liquide/solide (T0) de préférence compris entre 20 et 80°C, inférieure à celle (T2) du fluide circulant dans ladite conduite en opération et supérieure à celle (T1) à partir de laquelle le fluide circulant à l'intérieur de la conduite présente une augmentation de viscosité dommageable pour sa circulation dans ladite conduite.

11. Dispositif selon la revendication 10, **caractérisé en ce que** ledit matériau isolant à changement de phase (3₁) comprend des composés chimiques de la famille des alcanes, de préférence une paraffine comprenant une chaîne hydrocarbonée d'au moins quatorze atomes de carbone.

12. Dispositif selon la revendication précédente, **caractérisé en ce que** ladite paraffine est de l'heptacosane de formule C₁₇H₃₆ présentant une température de fusion d'environ 50°C.

13. Dispositif selon l'une des revendications 1 à 12, **caractérisé en ce que** ledit matériau isolant principal (3₃) et constitué d'un complexe isolant comprenant un premier composé consistant en un composé hydrocarboné comme la paraffine ou le gazole, en mélange avec un second composé consistant en un composé gélifiant et/ou à effet structurant, notamment par réticulation, tel qu'un second composé du type polyuréthane, polypropylène réticulé, polyéthylène réticulé ou silicone, de préférence ledit premier composé se présentant sous forme de particules ou micro-capsules dispersées au sein d'une matrice dudit second composé.

14. Dispositif selon la revendication 13, **caractérisé en ce que** ledit premier composé est choisi parmi les alcanes tels que des paraffines, des cires de bitumes, des goudrons, des alcools gras ou des glycols, de préférence ledit premier composé étant un composé à changement de phase (3₁).

15. Dispositif d'isolation selon l'une des revendications 1 à 14 **caractérisé en ce qu'**il comprend au moins deux cloisons transversales étanches (5), chacune desdites cloisons étant constituées d'une structure rigide fermée traversée par la ou lesdites conduite(s) (1), et solidaires de la ou desdites conduite(s) (1) et de ladite enveloppe (2), et lesdites poches (3₂) étant disposées autour de la ou desdites conduite(s) entre les deux dites cloisons transversales (5).

16. Dispositif selon la revendication 15, **caractérisé en ce que** lesdites cloisons transversales (5) sont espacées, de préférence à intervalles réguliers, le long d'un axe longitudinal (ZZ') d'une distance de 50 à 200 mètres.

17. Dispositif selon la revendication 15 ou 16, **caractérisé en ce qu'**il comprend au moins un gabarit centraliseur (6), de préférence une pluralité de gabarits centraliseurs (6), disposé(s), de préférence à intervalles réguliers, entre deux dites cloisons transversales étanches (5) successives le long dudit axe longitudinal (ZZ'), chaque gabarit centraliseur (6) étant constitué d'une pièce rigide solidaire de la ou desdites conduite(s) et présentant une forme qui autorise un déplacement limité de ladite enveloppe (2), en contraction et en expansion, en regard dudit gabarit centraliseur (6), et lesdites poches (3₂) étant disposées entre deux dits gabarits centraliseurs successifs, le cas échéant.

18. Dispositif selon la revendication 17, **caractérisé en ce que** ledit gabarit centraliseur (6) est constitué d'une pièce rigide, de préférence à surface externe (6₄) cylindrique, dont le périmètre de la section transversale est en retrait par rapport à celui de ladite cloison étanche (5), et limite les déformations de ladite enveloppe par butée mécanique de celle-ci sur ladite pièce rigide (6) en au moins deux points opposés (2₁-2₂ , 2₃-2₄) du périmètre de la section transversale de ladite enveloppe (2), ledit déplacement de l'enveloppe (2) en regard d'undit gabarit centraliseur (6), représentant une variation de 0,1 à 10 %, de préférence de 0,1 à 5 %, de la distance entre deux points opposés (2₁-2₂, 2₃-2₄) du périmètre de la section transversale de ladite enveloppe.

19. Dispositif selon l'une des revendications 17 ou 18, **caractérisé en ce que** ladite pièce rigide constituant ledit gabarit centraliseur (6) présente une partie de sa surface externe suffisamment en retrait par rapport à la surface de l'enveloppe, et/ou présente des perforations le traversant, de manière à créer un espace (6₂) qui permette le transfert de matière constitutive dudit revêtement isolant (2) à travers ledit gabarit centraliseur (6).

20. Dispositif selon l'une des revendications 16 à 19, **caractérisé en ce qu'**il comporte une pluralité dedits gabarits centraliseurs (6), et deux gabarits centraliseurs successifs sont espacés le long dudit axe longitudinal (ZZ') de l'enveloppe d'une distance de 2 à 5 mètres, et lesdites poches (3₂) étant intercalées entre deux dits gabarits centraliseurs (6) successifs.

21. Dispositif selon l'une des revendications 16 à 20, **caractérisé en ce qu'**il comprend au moins un, de préférence une pluralité, de gabarit(s) conformateur(s) (7) constitué(s) d'une structure rigide solidaire de la ou desdites conduite(s) et traversée par celle(s)-ci et solidaire de ladite enveloppe (2) à sa périphérie, disposé(s) entre deux dites cloisons étanches (5) successives, ledit gabarit conformateur présentant des ouvertures (7₁) permettant le passage de la matière constitutive dudit matériau isolant principal (3₃) à travers ledit gabarit conformateur (7).

22. Dispositif selon la revendication 21, **caractérisé en ce que** ladite structure ouverte dudit gabarit conformateur (7) est constituée d'une pièce cylindrique qui présente une section transversale dont le périmètre s'inscrit dans une figure géométrique identique à la figure géométrique définie par la forme du périmètre de la section transversale de ladite cloison étanche (5).

23. Dispositif selon la revendication 21 ou 22, **caractérisé en ce qu'**il comporte une pluralité de gabarits conformateurs disposés le long dudit axe longitudinal (ZZ') de l'enveloppe de préférence à intervalles réguliers, deux gabarits conformateurs (7) successifs étant espacés de préférence encore de 20 à 50 mètres.

24. Dispositif selon l'une des revendications 1 à 23, **caractérisé en ce que** ladite enveloppe (2) définit un périmètre présentant deux axes de symétrie (XX') et (YY') perpendiculaires entre eux, et audit axe longitudinal (ZZ').

25. Dispositif selon la revendication 24, **caractérisé en ce que** ladite section transversale de l'enveloppe est de forme circulaire.

26. Dispositif selon la revendication 24, **caractérisé en ce que** ladite section transversale de l'enveloppe est de forme ovale.

27. Dispositif selon la revendication 24, **caractérisé en ce que** ladite section transversale de l'enveloppe est de forme rectangulaire, de préférence avec des angles arrondis.

28. Dispositif d'isolation thermique d'un faisceau de conduites sous-marines, **caractérisé en ce qu'**il comprend un dispositif selon l'une des revendications 1 à 27 comprenant au moins deux dites conduites sous-marines disposées en parallèle.

29. Dispositif selon les revendications 21 et 28, **caractérisé en ce que** lesdites cloisons étanches (5), lesdits gabarits centraliseurs (6) et dits gabarits conformateur (7) maintiennent au moins deux dites conduites sous-marine (1) à distance fixe l'une de l'autre.

30. Dispositif d'isolation thermique unitaire utile pour obtenir un dispositif selon l'une des revendications 1 à 29, par assemblage bout à bout desdits dispositifs d'isolation thermique unitaires (1₁), **caractérisé en ce qu'**il comprend :
• un ou des éléments unitaires de conduite sous-marine à la place de la ou des conduite(s) sous-marines, et
• un revêtement isolant (3), unedite enveloppe de protection (2), et un dit revêtement isolant comprenant au moins une dite poche (3₂) contenant un dit matériau à changement de phase (3₁), tels que définis dans les revendications 1 à 14, chaque dit élément unitaire (1₁) comprenant à au moins une de ses extrémités ou à chacune de ses extrémités unedite cloison étanche (5), et de préférence desdits gabarits centraliseurs (6), et de préférence encore des gabarits conformateurs (7) tels que définis dans les revendications 15 à 29 disposé entre deux cloisons étanches successives.

31. Procédé d'assemblage d'un dispositif unitaire selon la revendication 30, **caractérisé en ce qu'**il comprend les étapes dans lesquelles :
a) on positionne le cas échéant, le ou les dits éléments unitaires de conduite par rapport à desdites cloisons transversales étanches (5), dits gabarits centraliseurs (6) et dits gabarits conformateurs (7), puis
b) on installe desdites cales (4) sur lesdits éléments unitaires de conduite (1), ou un dit matériau isolant solide (3₃) contre la paroi dudit élément de conduite unitaire (1), et
c) on plaque lesdites poches (3₂) contenant un dit matériau à changement de phase contre lesdites cales (4) ou un dit matériau isolant solide (3₄), et
d) on insère l'ensemble ainsi obtenu à l'étape c) dans une dite enveloppe externe (2), et
e) on injecte, le cas échéant, un dit matériau isolant principal (3₃) dans l'espace entre lesdites poches (3₁) et l'enveloppe externe (2) et, le cas échéant, l'espace entre lesdites poches (3₁) et les parois du ou desdits élément(s) de conduite unitaire(s) (1).

32. Procédé selon la revendication 31, **caractérisé en ce que** ledit matériau isolant principal est un complexe comprenant différents composants qui sont mélangés, puis injectés à l'état liquide au sein des différents compartiments délimités par deux dites cloisons étanches successives et ledit matériau isolant se transforme en gel par réticulation d'au moins un de ses dits composants.

33. Procédé de réalisation d'une isolation thermique d'au moins une conduite sous marine, **caractérisé en ce qu'**on réalise des dispositifs d'isolation thermique unitaire selon la revendication 30, et on les assemble bout à bout.

## Claims

1. A device for thermally insulating at least one undersea pipe (1), the device comprising:
- a thermally insulating covering (3₁, 3₃) surrounding said pipe(s);
- said covering itself being covered by an outer leakproof protective case (2), and said case (2) being made of a flexible or semirigid material suitable for remaining in contact with the outside surface of said insulating covering (3) when it deforms,
the device being **characterised in that**:
- said insulating covering comprises a phase-change material, preferably an insulating phase-change material (3₁) confined in at least one container (3₂) made of a flexible or semirigid material that is deformable; and
- said container(s) (3₂) being disposed around said pipe(s) (1).

2. An insulating device according to claim 1, **characterised in that** in a cross-section of said pipe(s) (1), level with said container(s) (3₂), said pipe(s) is/are surrounded by said container(s) in substantially continuous manner.

3. An insulating device according to claim 1 or claim 2, **characterised in that** said containers (3₂) are placed close to the pipe (1) in such a manner that said pipe does not come directly into contact with some of said container(s) (3₂), and preferably does not come into contact with any of the containers.

4. A device according to claim 3, **characterised in that** said containers are disposed against spacers (4), said spacers being disposed against and around said pipe (1) in such a manner as to leave a gap between said containers and said pipe (1).

5. A device according to one of claims 2 to 4, **characterised in that** said containers (3₂) are spaced apart from said pipe by a distance of 5 mm to 10 cm, and preferably by a distance of 1 cm to 5 cm.

6. An insulating device according to one of the preceding claims, **characterised in that** said pipe (1) is surrounded by a second insulating material (3₄) that is solid, being applied against said pipe (1), preferably in the form of a shell of syntactic foam, said containers (3₂) being pressed against said solid insulating material (3₄) surrounding said pipe (1).

7. A device according to one of claims 1 to 6, **characterised in that** said insulating covering covered in a said leakproof protective case (2) comprises a main insulating material (3₃), preferably an insulating gel disposed between said outer case (2) and said container(s) (3₂) of phase-change material surrounding said pipe(s) (1).

8. An insulating device according to claim 7, **characterised in that** said main insulating material (3₃) surrounds said pipe(s) (1) and provides separation between said pipe(s) and said containers (3₂) in the gap between said container(s) and said pipe(s).

9. An insulating device according to one of claims 1 to 8, **characterised in that** in the portions of the pipe(s) surrounded by said containers (3₂), the device has at least two and preferably three or four containers in a said cross-section of said pipe(s) surrounded by said containers (3₂), and also preferably surrounding said pipe(s) in a manner that is substantially continuous.

10. An insulating device according to one of claims 1 to 9, **characterised in that** said phase-change material (3₁) presents a liquid/solid melting temperature (T₀) that preferably lies in the range 20°C to 80°C, that is lower than the temperature (T₂) of the fluid flowing in said pipe when it is in operation, and higher than the temperature (T₁) at which the fluid flowing inside the pipe presents an increase in viscosity that is harmful for its ability to flow in said pipe.

11. A device according to claim 10, **characterised in that** said insulating phase-change material (3₁) comprises chemical compounds of the alkane family, preferably a paraffin having a hydrocarbon chain with at least 14 carbon atoms.

12. A device according to the preceding claim, **characterised in that** said paraffin is heptacosane of formula C₁₇H₃₆ presenting a melting temperature of about 50°C.

13. A device according to one of claims 1 to 12, **characterised in that** said main insulating material (3₃) is constituted by an insulating mixture comprising a first compound consisting in a hydrocarbon compound such as paraffin or gas oil, mixed with a second compound consisting in a gelling compound and/or a structuring effect compound, in particular by means of cross-linking, such as a second compound of the polyurethane type, of the cross-linked polypropylene type, of the cross-linked polyethylene type, or of the silicone type, and preferably said first compound is in the form of particles or microcapsules dispersed within a matrix of said second compound.

14. A device according to claim 13, **characterised in that** said first compound is selected from alkanes such as paraffins, waxes, bitumens, tars, fatty alcohols, and glycols, said first compound preferably being a phase-change compound (3₁).

15. An insulating device according to one of claims 1 to 14, **characterised in that** it includes at least two leaktight transverse partitions (5), each of said partitions being constituted by a closed rigid structure having said pipe(s) (1) passing therethrough, and secured to said pipe(s) (1) and to said case (2), and said containers (3₂) being disposed around said pipe(s) between said two transverse partitions (5).

16. A device according to claim 15, **characterised in that** said transverse partitions (5) are spaced apart, preferably at regular intervals, along said longitudinal axis (ZZ') by a distance of 50 m to 200 m.

17. A device according to claim 15 or claim 16, **characterised in that** it includes at least one centralizing template (6), preferably a plurality of centralizing templates (6), located, preferably at regular intervals, between said two successive leaktight transverse partitions (5) along said longitudinal axis (ZZ'), each centralizing template (6) being constituted by a rigid part secured to said pipe(s) and presenting a shape which allows limited displacement of said case (2) in contraction and in expansion in register with said centralizing template (6), said containers (3₂) being disposed between two successive ones of said centralizing templates, where appropriate.

18. A device according to claim 17, **characterised in that** said centralizing template (6) is constituted by a rigid part, preferably having a cylindrical outside surface (6₄) with a cross-section whose perimeter is set back relative to that of said leaktight partition (5), the centralizing template limiting deformation of said case by the case coming into mechanical abutment against said rigid part (6) at at least two opposite points (2₁-2₂, 2₃-2₄) of the perimeter of the cross-section of said case (2), said displacement of the case (2) in register with a said centralizing template (6) representing variation of 0.1% to 10%, and preferably of 0.1% to 5%, of the distance between two opposite points (2₁-2₂, 2₃-2₄) of the perimeter of the cross-section of said case.

19. A device according to claim 17 or claim 18, **characterised in that** said rigid piece constituting said centralizing template (6) presents a portion of its outside surface that is set back sufficiently relative to the surface of the case, and/or presents perorations passing through it, so as to create a space (6₂) allowing the material constituting said insulating covering (2) to be transferred through said centralizing template (6).

20. A device according to one of claims 16 to 19, **characterised in that** it has a plurality of said centralizing templates (6), and two successive centralizing templates are spaced apart along said longitudinal axis (ZZ') of the case by a distance of 2 m to 5 m, with said containers (3₂) being interposed between two successive ones of said centralizing templates (6).

21. A device according to one of claims 16 to 20, **characterised in that** it has at least one, and preferably a plurality of shaping templates (7) each constituted by a rigid structure secured to said pipe(s) with the pipe(s) passing therethrough, and secured at its periphery to said case (2), the shaping template(s) being disposed between two successive ones of said leaktight partitions (5), said shaping template having openings (7₁) allowing the material constituting said main insulating material (3₃) to pass through said shaping template (7).

22. A device according to claim 21, **characterised in that** said open structure of said shaping template (7) is constituted by a cylindrical part presenting a cross-section of perimeter that is inscribed in a geometrical figure identical to the geometrical figure defined by the shape of the perimeter of the cross-section of said leaktight partition (5).

23. A device according to claim 21 or claim 22, **characterised in that** it has a plurality of shaping templates disposed along said longitudinal axis (ZZ') of the case, preferably at regular intervals, two successive shaping templates (7) being preferably spaced apart by 20 m to 50 m.

24. A device according to one of claims 1 to 23, **characterised in that** said case (2) defines a perimeter presenting two axes of symmetry (XX' and YY') that are perpendicular to each other and to said longitudinal axis (ZZ').

25. A device according to claim 24, **characterised in that** said cross-section of the case is circular in shape.

26. A device according to claim 24, **characterised in that** said cross-section of the case is oval in shape.

27. A device according to claim 24, **characterised in that** said cross-section of the case is rectangular in shape, preferably with rounded corners.

28. A device for thermally insulating a bundle of undersea pipes, the device being **characterised in that** it comprises a device according to one of claims 1 to 27 having at least two of said undersea pipes disposed in parallel.

29. A device according to claim 28, **characterised in that** said leaktight partitions (5), said centralizing templates (6), and said shaping templates (7) hold at least two of said undersea pipes (1) at a fixed distance apart.

30. A unit thermally insulating device suitable for building a device according to one of claims 1 to 29 by assembling said unit thermally insulating devices (1₁) end to end, the unit device being **characterised in that** it comprises:
• one or more unit undersea pipe elements replacing the undersea pipe(s); and
• an insulating covering (3), a said protective case (2), and a said insulating covering comprising at least one said container (3₂) containing a said phase-change material (3₁) as defined in claims 1 to 14, each said unit element (1₁) having at at least one of its ends or at both ends, a said leaktight partition (5), and preferably said centralizing templates (6) and also preferably shaping templates (7) as defined in claims 15 to 29 disposed between two successive leaktight partitions.

31. A method of assembling a unit device according to claim 30, **characterised in that** it comprises the following steps:
a) where appropriate, positioning said unit pipe element(s) relative to said leaktight transverse partitions (5), said centralizing templates (6), and said shaping templates (7), then
b) installing said spacers (4) on said unit pipe elements (1), or installing a said solid insulating material (3₃) against the wall of said unit pipe element (1); and
c) pressing said containers (3₂) containing a said phase-change material against said spacers (4) or against a said solid insulating material (3₄); and
d) inserting the assembly as obtained in step c) in a said outer case (2); and
e) where appropriate, injecting a said main insulating material (3₃) into the space between said containers (3₁) and the outer case (2), and where appropriate into the space between said containers (3₁) and the walls of said unit pipe element(s) (1).

32. A method according to claim 31, **characterised in that** said main insulating material is a mixture comprising various components which are mixed together and then injected in the liquid state into the various compartments defined by said two successive leaktight partitions and said insulating material becomes transformed into a gel by at least one of its said components cross-linking.

33. A method of thermally insulating at least one undersea pipe, the method being **characterised in that** unit thermally insulating devices according to claim 30 are made and then assembled together end to end.

## Patentansprüche

1. Vorrichtung zur Wärmeisolierung wenigstens einer Unterwasserrohrleitung (1), umfassend:
- eine wärmeisolierende Beschichtung (3₁ - 3₃), welche die Rohrleitung oder Rohrleitungen umgibt,
- wobei die Beschichtung mit einer dichten Außenschutzhülle (2) überzogen ist und wobei die Hülle (2) aus einem flexiblen oder halbstarren Material besteht, das geeignet ist, mit der Außenfläche der Isolierbeschichtung (3) in Kontakt zu bleiben, wenn sich diese verformt,
**dadurch gekennzeichnet, daß**:
- die Isolierbeschichtung ein Phasenwechselmaterial, vorzugsweise ein Phasenwechselisoliermaterial (3₁) umfaßt, das in wenigstens einer aus einem flexiblen oder halbstarren verformbaren Material gefertigten Tasche (3₂) eingeschlossen ist, und
- die Tasche oder Taschen (3₂) um die Rohrleitung oder Rohrleitungen (1) herum angeordnet ist (sind).

2. Isolationsvorrichtung nach Anspruch 1, **dadurch gekennzeichnet, daß** in einem Querschnitt der Rohrleitung oder Rohrleitungen (1), im Bereich der Tasche oder Taschen (3₂), die Rohrleitung oder Rohrleitungen von der oder den Tasche(n) im wesentlichen durchgehend umgeben ist (sind).

3. Isolationsvorrichtung nach Anspruch 1 oder 2, **dadurch gekennzeichnet, daß** die Taschen (3₂) in der Nähe der Rohrleitung (1) derart angeordnet sind, daß wenigstens ein Teil, vorzugsweise die Gesamtheit der Tasche oder Taschen (3₂) nicht direkt mit ihr in Kontakt ist.

4. Vorrichtung nach Anspruch 3, **dadurch gekennzeichnet, daß** die Taschen an Keilen (4) angeordnet sind, wobei die Keile an der und um die Rohrleitung (1) derart angeordnet sind, daß zwischen den Taschen und der Rohrleitung (1) ein Raum gelassen wird.

5. Vorrichtung nach einem der Ansprüche 2 bis 4, **dadurch gekennzeichnet, daß** die Taschen (3₂) um einen Abstand zwischen 5 mm und 10 cm, vorzugsweise zwischen 1 und 5 cm von der Rohrleitung beabstandet sind.

6. Isolationsvorrichtung nach einem der vorhergehenden Ansprüche, **dadurch gekennzeichnet, daß** die Rohrleitung (1) von einem zweiten festen Isoliermaterial (3₄) umgeben ist, das auf die Rohrleitung (1) aufgebracht ist, vorzugsweise in Form einer Schale aus syntaktischem Schaum, wobei die Taschen (3₂) auf das die Rohrleitung (1) umgebende feste Isoliermaterial (3₄) aufgebracht sind.

7. Vorrichtung nach einem der Ansprüche 1 bis 6, **dadurch gekennzeichnet, daß** die mit einer dichten Schutzhülle (2) überzogene Isolierbeschichtung ein Hauptisoliermaterial (3₃), vorzugsweise ein Isoliergel umfaßt, das zwischen der Außenhülle (2) und der oder den die Rohrleitung oder Rohrleitungen umgebenden Tasche(n) (3₂) mit Phasenwechselmaterial angeordnet ist.

8. Isolationsvorrichtung nach Anspruch 7, **dadurch gekennzeichnet, daß** das Hauptisoliermaterial (3₃) die Rohrleitung oder Rohrleitungen (1) umgibt und die Trennung zwischen der oder den Rohrleitung(en) und den Taschen (3₂) in dem die Tasche oder Taschen und die Rohrleitung oder Rohrleitungen trennenden Raum sicherstellt.

9. Isolationsvorrichtung nach einem der Ansprüche 1 bis 8, **dadurch gekennzeichnet, daß** in den Abschnitten der von den Taschen (3₂) umgebenen Rohrleitung(en) die Vorrichtung wenigstens zwei, vorzugsweise drei oder vier Taschen in einem Querschnitt der von Taschen (3₂) umgebenen Rohrleitung oder Rohrleitungen aufweist, die weiterhin vorzugsweise die Rohrleitung oder Rohrleitungen im wesentlichen durchgehend umgeben.

10. Isolationsvorrichtung nach einem der Ansprüche 1 bis 9, **dadurch gekennzeichnet, daß** das Phasenwechselmaterial (3₁) eine Flüssig-Fest-Schmelztemperatur (T0) von vorzugsweise 20 bis 80 °C aufweist, die geringer ist als diejenige (T2) des im Betrieb in der Rohrleitung zirkulierenden Fluids und über derjenigen (T1) liegt, ab der das in der Rohrleitung zirkulierende Fluid eine für sein Zirkulieren in der Rohrleitung schädliche Viskositätserhöhung aufweist.

11. Vorrichtung nach Anspruch 10, **dadurch gekennzeichnet, daß** das Phasenwechselisoliermaterial (3₁) chemische Verbindungen aus der Familie der Alkane, vorzugsweise ein Paraffin aufweist, das eine Kohlenwasserstoffkette mit wenigstens vierzehn Kohlenstoffatomen umfaßt.

12. Vorrichtung nach dem vorhergehenden Anspruch, **dadurch gekennzeichnet, daß** das Paraffin Heptacosan der Formel C₁₇H₃₆ ist, das eine Schmelztemperatur von etwa 50 °C aufweist.

13. Vorrichtung nach einem der Ansprüche 1 bis 12, **dadurch gekennzeichnet, daß** das Hauptisoliermaterial (3₃) von einem Isolierkomplex gebildet ist, der eine aus einer Kohlenwasserstoffverbindung wie Paraffin oder Gasöl bestehende erste Verbindung umfaßt, die in Mischung mit einer zweiten Verbindung ist, welche aus einer gelbildenden Verbindung und/oder einer Verbindung mit strukturierender Wirkung, insbesondere durch Vernetzung besteht, wie einer zweiten Verbindung vom Typ Polyurethan, vernetztes Polypropylen, vernetztes Polyethylen oder Silikon, wobei vorzugsweise die erste Verbindung in Form von Partikeln oder Mikrokapseln vorliegt, die innerhalb einer Matrix der zweiten Verbindung feinst verteilt sind.

14. Vorrichtung nach Anspruch 13, **dadurch gekennzeichnet, daß** die erste Verbindung unter den Alkanen, wie den Paraffinen, Bitumenwachsen, Teeren, Fettalkoholen oder Glykolen ausgewählt ist, wobei vorzugsweise die erste Verbindung eine Phasenwechselverbindung (3₁) ist.

15. Isolationsvorrichtung nach einem der Ansprüche 1 bis 14, **dadurch gekennzeichnet, daß** sie wenigstens zwei dichte Quertrennwände (5) umfaßt, wobei eine jede der Trennwände von einer von der oder den Rohrleitung(en) durchquerten geschlossenen starren Struktur gebildet ist und mit der oder den Rohrleitung(en) (1) und der Hülle (2) fest verbunden ist und wobei die Taschen (3₂) um die Rohrleitung oder Rohrleitungen zwischen den zwei Quertrennwänden (5) angeordnet sind.

16. Vorrichtung nach Anspruch 15, **dadurch gekennzeichnet, daß** die Quertrennwände (5) entlang einer Längsachse (ZZ') um einen Abstand von 50 bis 200 Metern, vorzugsweise in gleichmäßigen Abständen, beabstandet sind.

17. Vorrichtung nach Anspruch 15 oder 16, **dadurch gekennzeichnet, daß** sie wenigstens eine Zentriervorrichtung (6), vorzugsweise eine Vielzahl von Zentriervorrichtungen (6) aufweist, die vorzugsweise in gleichmäßigen Abständen zwischen zwei entlang der Längsachse (ZZ') aufeinanderfolgenden dichten Quertrennwänden (5) angeordnet ist (sind), wobei jede Zentriervorrichtung (6) von einem mit der oder den Rohrleitung(en) fest verbundenen starren Teil gebildet ist und eine Form aufweist, die eine begrenzte Kontraktions- und Ausdehnungsbewegung der Hülle (2) gegenüber der Zentriervorrichtung (6) zuläßt, und wobei die Taschen (3₂) ggf. zwischen zwei aufeinanderfolgenden Zentriervorrichtungen angeordnet sind.

18. Vorrichtung nach Anspruch 17, **dadurch gekennzeichnet, daß** die Zentriervorrichtung (6) von einem starren Teil, vorzugsweise mit zylindrischer Außenfläche (6₄), gebildet ist, dessen Umfang des Querschnitts in bezug auf den der dichten Trennwand (5) zurückgesetzt ist, und die Verformungen der Hülle durch mechanischen Anschlag derer an dem starren Teil (6) an wenigstens zwei gegenüberliegenden Punkten (2₁-2₂, 2₃-2₄) des Umfangs des Querschnitts der Hülle (2) begrenzt, wobei die Bewegung der Hülle (2) gegenüber einer Zentriervorrichtung (6) eine Änderung von 0,1 bis 10 %, vorzugsweise von 0,1 bis 5 % des Abstandes zwischen zwei gegenüberliegenden Punkten (2₁-2₂, 2₃-2₄) des Umfangs des Querschnitts der Hülle darstellt.

19. Vorrichtung nach einem der Ansprüche 17 oder 18, **dadurch gekennzeichnet, daß** das starre Teil, welches die Zentriervorrichtung (6) bildet, einen Teil seiner Außenfläche aufweist, der gegenüber der Oberfläche der Hülle ausreichend zurückspringt, und/oder es durchquerende Perforierungen aufweist, so daß ein Raum (6₂) geschaffen wird, der den Transfer von die Isolierbeschichtung (2) bildendem Material durch die Zentriervorrichtung (6) ermöglicht.

20. Vorrichtung nach einem der Ansprüche 16 bis 19, **dadurch gekennzeichnet, daß** sie eine Vielzahl von Zentriervorrichtungen (6) umfaßt und zwei aufeinanderfolgende Zentriervorrichtungen entlang der Längsachse (ZZ') der Hülle um einen Abstand von 2 bis 5 Metern beabstandet sind, und wobei die Taschen (3₂) zwischen zwei aufeinanderfolgenden Zentriervorrichtungen (6) eingefügt sind.

21. Vorrichtung nach einem der Ansprüche 16 bis 20, **dadurch gekennzeichnet, daß** sie wenigstens ein, vorzugsweise eine Vielzahl von Formgebungsvorrichtung(en) (7) aufweist, die von einer starren Struktur gebildet ist (sind), welche mit der oder den Rohrleitung(en) fest verbunden und von dieser (diesen) durchgriffen wird und welche mit der Hülle (2) an deren Umfang fest verbunden ist, und die zwischen zwei aufeinanderfolgenden dichten Trennwänden (5) angeordnet ist (sind), wobei die Formgebungsvorrichtung Öffnungen (7₁) aufweist, die den Durchgang des das Hauptisoliermaterial (3₃) bildenden Materials durch die Formgebungsvorrichtung (7) ermöglichen.

22. Vorrichtung nach Anspruch 21, **dadurch gekennzeichnet, daß** die offene Struktur der Formgebungsvorrichtung (7) von einem zylindrischen Teil gebildet ist, das einen Querschnitt aufweist, dessen Umfang in eine geometrische Figur einbeschrieben ist, die mit der durch die Form des Umfangs des Querschnitts der dichten Trennwand (5) definierten geometrischen Figur identisch ist.

23. Vorrichtung nach Anspruch 21 oder 22, **dadurch gekennzeichnet, daß** sie eine Vielzahl von Formgebungsvorrichtungen aufweist, die entlang der Längsachse (ZZ') der Hülle vorzugsweise in gleichmäßigen Abständen angeordnet sind, wobei zwei aufeinanderfolgende Formgebungsvorrichtungen (7) weiterhin vorzugsweise um 20 bis 50 Meter beabstandet sind.

24. Vorrichtung nach einem der Ansprüche 1 bis 23, **dadurch gekennzeichnet, daß** die Hülle (2) einen Umfang definiert, der zwei zueinander und zur Längsachse (ZZ') senkrechte Symmetrieachsen (XX') und (YY') aufweist.

25. Vorrichtung nach Anspruch 24, **dadurch gekennzeichnet, daß** der Querschnitt der Hülle kreisförmig ist.

26. Vorrichtung nach Anspruch 24, **dadurch gekennzeichnet, daß** der Querschnitt der Hülle oval ist.

27. Vorrichtung nach Anspruch 24, **dadurch gekennzeichnet, daß** der Querschnitt der Hülle rechteckig, vorzugsweise mit abgerundeten Ecken ist.

28. Vorrichtung zur Wärmeisolierung eines Strangs von Unterwasserrohrleitungen, **dadurch gekennzeichnet, daß** sie eine Vorrichtung nach einem der Ansprüche 1 bis 27 mit wenigstens zwei parallel zueinander angeordneten Unterwasserrohrleitungen umfaßt.

29. Vorrichtung nach den Ansprüchen 21 und 28, **dadurch gekennzeichnet, daß** die dichten Trennwände (5), die Zentriervorrichtungen (6) und die Formgebungsvorrichtungen (7) wenigstens zwei Unterwasserrohrleitungen (1) in festem Abstand voneinander halten.

30. Einzelwärmeisolationsvorrichtung für den Erhalt einer Vorrichtung nach einem der Ansprüche 1 bis 29 durch Aneinanderfügen der Einzelwärmeisolationsvorrichtungen (1₁), **dadurch gekennzeichnet, daß** sie folgendes umfaßt:
- ein oder mehrere Einzelelement(e) einer Unterwasserrohrleitung anstelle der Unterwasserrohrleitung(en), und
- eine Isolierbeschichtung (3), eine Schutzhülle (2), und wobei eine Isolierbeschichtung wenigstens eine ein Phasenwechselmaterial (3₁) enthaltende Tasche (3₂) umfaßt, wie sie in den Ansprüche 1 bis 14 definiert sind, wobei jedes Einzelelement (1₁) an wenigstens einem seiner Enden oder an jedem seiner Enden eine dichte Trennwand (5) und vorzugsweise Zentriervorrichtungen (6) und weiterhin vorzugsweise Formgebungsvorrichtungen (7) umfaßt, wie sie in den Ansprüchen 15 bis 29 definiert sind, die zwischen zwei aufeinanderfolgenden dichten Trennwänden angeordnet sind.

31. Verfahren zum Zusammenfügen einer Einzelvorrichtung nach Anspruch 30, **dadurch gekennzeichnet, daß** es die Schritte umfaßt, in denen:
a) das oder die Rohrleitungseinzelelement(e) ggf. gegenüber den dichten Quertrennwänden (5), den Zentriervorrichtungen (6) und den Formgebungsvorrichtungen (7) positioniert werden, anschließend
b) Keile (4) an den Rohrleitungseinzelelementen (1) oder ein festes Isoliermaterial (3₃) an der Wand des Rohrleitungseinzelelements (1) angebracht werden, und
c) die ein Phasenwechselmaterial enthaltenden Taschen (3₂) gegen die Keile (4) oder ein festes Isoliermaterial (3₄) gedrückt werden, und
d) das auf diese Weise unter Schritt c) erhaltene Ganze in eine Außenhülle (2) eingefügt wird, und
e) ggf. ein Hauptisoliermaterial (3₃) in den Raum zwischen den Taschen (3₁) und der Außenhülle (2) und ggf. den Raum zwischen den Taschen (3₁) und den Wänden des oder der Rohrleitungseinzelelemente(s) (1) eingespritzt wird.

32. Verfahren nach Anspruch 31, **dadurch gekennzeichnet, daß** das Hauptisoliermaterial ein Komplex mit unterschiedlichen Komponenten ist, die gemischt, dann in flüssigem Zustand in die verschiedenen, durch zwei aufeinanderfolgende dichte Trennwände begrenzten Abschnitte eingespritzt werden, und das Isoliermaterial sich durch Vernetzung wenigstens einer seiner Komponenten in Gel verwandelt.

33. Verfahren zur Herstellung einer Wärmeisolierung wenigstens einer Unterwasserohrleitung, **dadurch gekennzeichnet, daß** Einzelwärmeisoliervorrichtungen nach Anspruch 30 gefertigt und diese aneinandergefügt werden.
